(19) Europäisches Patentamt

European Patent Office

Office européen des brevets

(11) **EP 4 564 837 A1**

(12) # EUROPEAN PATENT APPLICATION
published in accordance with Art. 153(4) EPC

(43) Date of publication:
**04.06.2025 Bulletin 2025/23**

(21) Application number: **23860644.6**

(22) Date of filing: **04.07.2023**

(51) International Patent Classification (IPC):
$H04N\ 23/63^{(2023.01)}$     $H04N\ 23/90^{(2023.01)}$
$H04N\ 23/57^{(2023.01)}$     $H04M\ 1/02^{(2006.01)}$
$H04M\ 1/72448^{(2021.01)}$

(52) Cooperative Patent Classification (CPC):
**H04M 1/02; H04M 1/72448; H04N 23/57;
H04N 23/63; H04N 23/90**

(86) International application number:
**PCT/KR2023/009441**

(87) International publication number:
**WO 2024/048961 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.08.2022 KR 20220110271
16.09.2022 KR 20220117401**

(71) Applicant: **Samsung Electronics Co., Ltd.
Suwon-si, Gyeonggi-do 16677 (KR)**

(72) Inventors:
• **JANG, Jongwoon
Suwon-si Gyeonggi-do 16677 (KR)**

• **KIM, Jinhyun
Suwon-si Gyeonggi-do 16677 (KR)**
• **LEE, Dasom
Suwon-si Gyeonggi-do 16677 (KR)**
• **PARK, Bongseok
Suwon-si Gyeonggi-do 16677 (KR)**
• **AHN, Donghyuk
Suwon-si Gyeonggi-do 16677 (KR)**
• **LEE, Taehoon
Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE AND METHOD FOR CONTROLLING ONE OR MORE CAMERAS ON BASIS OF VARIATION OF DISPLAY**

(57) According to one embodiment, a processor of an electronic device may display a preview image within a display area of a flexible display having a first size, on the basis of a first camera having an FoV corresponding to the first size. The processor may identify the size of the display area in response to an input indicating that the size of the display area has changed to a second size. The processor may activate a second camera having an FoV corresponding to a second size, on the basis of identifying that a difference between the size of the display area and the second size is less than or equal to a specified difference, while the size of the display area has changed on the basis of the input. The processor may display the preview image on the basis of the activated second camera, on the basis of identifying that the size of the display area has changed to the second size.

EP 4 564 837 A1

**(Cont. next page)**

100

ELECTRONIC DEVICE 101

INPUT
MODULE
150

SOUND
OUTPUT
MODULE
155

DISPLAY
MODULE
160

MEMORY 130

VOLATILE MEMORY 132

NON-VOLATILE MEMORY 134

INTERNAL MEMORY 136

EXTERNAL MEMORY 138

PROGRAM 140

APPLICATION 146

MIDDLEWARE 144

OPERATING SYSTEM 142

BATTERY
189

POWER
MANAGE-
MENT
MODULE
188

PROCESSOR 120

MAIN
PROCESSOR
121

AUXILIARY
PROCESSOR
123

COMMUNICATION MODULE 190

WIRELESS COMMUNICATION
MODULE 192

WIRED COMMUNICATION
MODULE 194

SUBSCRIBER
IDENTIFICATION
MODULE
196

ANTENNA
MODULE
197

AUDIO MODULE
170

SENSOR MODULE
176

HAPTIC MODULE
179

CAMERA MODULE
180

INTERFACE
177

CONNECTING
TERMINAL
178

SECOND
NETWORK
199

ELECTRONIC
DEVICE
104

FIRST NETWORK
198

ELECTRONIC
DEVICE
102

SERVER
108

FIG. 1

**Description**

**[Technical Field]**

The following descriptions relate to an electronic device and a method for controlling one or more cameras on a basis of variation of a display.

**[Background Art]**

Using a flexible display, an electronic device having a deformable form factor is being developed. For example, an electronic device including a plurality of foldable housings may provide a user experience based on a shape of the electronic device to a user by using a flexible display disposed across the plurality of housings. For example, based on a shape of the flexible display being folded or unfolded by the user's external force, the electronic device may change the content displayed on the flexible display. For another example, an electronic device that rolls up or unfolds the flexible display is being developed.

**[Disclosure]**

**[Technical Solution]**

An electronic device according to an embodiment may comprise a housing, a plurality of cameras exposed to an outside through a surface of the housing, a flexible display that is insertable into the housing, or is extractable from the housing, a sensor for detecting a size of a displaying area of the flexible display extracted from the housing, and a processor. The processor may be configured to display, in the displaying area of the flexible display having a first size, a preview image based on a first camera having a field-of-view (FoV) corresponding to the first size among the plurality of cameras. The processor may be configured to identify a size of the displaying area by using the sensor, in response to an input which indicates modifying the size of the displaying area to a second size different from the first size. The processor may be configured to activate, in a state where the size of the displaying area is modified based on the input, a second camera having a FoV corresponding to the second size among the plurality of cameras, based on identifying that a difference between the size of the displaying area and the second size is lower than or equal to a preset difference by using the sensor. The processor may be configured to display, based on identifying that the size of the displaying area is modified to the second size by the input, the preview image based on the activated second camera among the first camera and the second camera.

A method of an electronic device according to an embodiment may comprise displaying, in a displaying area of a flexible display of the electronic device having a first size, a preview image based on a first camera having a field-of-view (FoV) corresponding to the first size among a plurality of cameras of the electronic device. The method may comprise identifying a size of the displaying area by using a sensor of the electronic device, in response to an input which indicates modifying the size of the displaying area to a second size different from the first size. The method may comprise activating, in a state where the size of the displaying area is modified based on the input, a second camera having a FoV corresponding to the second size among the plurality of cameras, based on identifying that a difference between the size of the displaying area and the second size is lower than or equal to a preset difference by using the sensor. The method may comprise displaying, based on identifying that the size of the displaying area is modified to the second size by the input, the preview image based on the activated second camera among the first camera and the second camera.

An electronic device according to an embodiment may comprise a housing, a plurality of cameras exposed to an outside through a surface of the housing, a flexible display that is insertable into the housing, or is extractable from the housing, a sensor for detecting a size of a displaying area of the flexible display extracted from the housing, and a processor. The processor may be configured to identify, among the plurality of cameras, a first camera having a field-of-view (FoV) corresponding to a size of the displaying area. The processor may be configured to display a preview image in the displaying area based on at least a portion of frames obtained from the identified first camera. The processor may be configured to modify, based on identifying that the size of the displaying area is modified, the preview image displayed in the displaying area by segmenting the frames based on positions of one or more visual objects included in the preview image, and the modified size. The processor may be configured to display, based on identifying that the size of the displaying area is modified to a preset size associated with a FoV of a second camera different from the first camera, the preview image in the displaying area based on at least a portion of frames obtained from the second camera.

A method of an electronic device according to an embodiment may comprise identifying, among a plurality of cameras of the electronic device, a first camera having a field-of-view (FoV) corresponding to a size of a displaying area of a flexible display extracted from a housing of the electronic device. The method may comprise displaying a preview image in the displaying area based on at least a portion of frames obtained from the identified first camera. The method may comprise modifying, based on identifying that the size of the displaying area is modified, the preview image displayed in the displaying area by segmenting the frames based on positions of one or more visual objects included in the preview image, and the modified size. The method may comprise displaying, based on identifying that the size of the displaying area is modified to a preset size associated with a FoV of a second camera different from the first camera, the preview image in the displaying area based on at least a portion of frames obtained from the second camera.

[Description of the Drawings]

FIG. 1 is a block diagram of an electronic device according to one embodiment.

FIGS. 2A to 2B illustrate an example of an operation in which an electronic device deforms between states in different shapes, according to an embodiment.

FIGS. 3A to 3B illustrate an example of an operation in which an electronic device displays a preview image based on cameras having different FoVs, according to an embodiment.

FIG. 4 illustrates an example of hardware included in an electronic device according to an embodiment.

FIG. 5 illustrates an example of an operation in which an electronic device activates different cameras based on a size of a displaying area of a flexible display, according to an embodiment.

FIGS. 6A, 6B, and 6C illustrate an example of an operation in which an electronic device controls different cameras based on a size of a displaying area of a flexible display, according to an embodiment.

FIG. 7 illustrates an example of a screen displayed in a flexible display by an electronic device according to an embodiment.

FIG. 8 illustrates an example of a flowchart for describing an operation of an electronic device according to an embodiment.

FIG. 9 illustrates an example of a flowchart for describing an operation of an electronic device according to an embodiment.

FIG. 10A is a top plan view of an exemplary electronic device 101 in a first state.

FIG. 10B is a bottom view of an exemplary electronic device in a first state.

FIG. 10C is a top plan view of an exemplary electronic device in a second state.

FIG. 10D is a bottom view of an exemplary electronic device 101 in a second state.

FIGS. 11A and 11B are exploded perspective views of an exemplary electronic device.

FIG. 12A is a cross-sectional view of an exemplary electronic device in a first state.

FIG. 12B is a cross-sectional view of an exemplary electronic device in a second state.

[Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

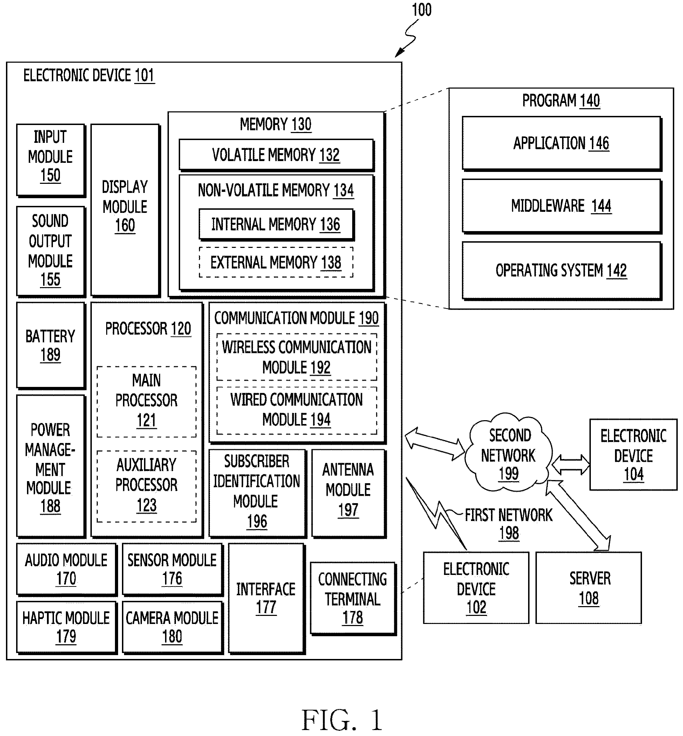

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

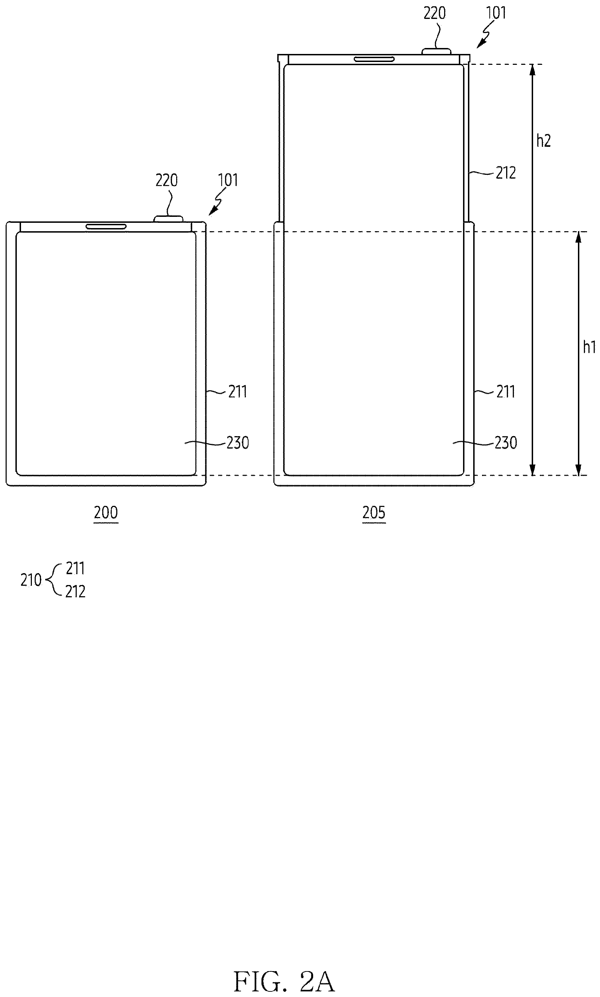

FIGS. 2A to 2B are exemplary diagrams for explaining an operation in which an electronic device 101 deforms between states in different shapes, according to an embodiment. The electronic device 101 of FIGS. 2A to 2B may be an example of the electronic device 101 of FIG. 1.

Referring to FIGS. 2A to 2B, the electronic device 101 may be a terminal owned by a user. The terminal may include, for example, a personal computer (PC) such as a laptop and a desktop, a smartphone, a smartpad, and a tablet personal computer (PC). The terminal may include, for example, a smart accessory such as a smartwatch and a head-mounted device (HMD). According to an embodiment, a housing 210 of the electronic device 101 may include an internal space in which one or more hardware components (e.g., one or more hardware described above with reference to FIG. 1) included in the electronic device 101 are positioned. The housing 210 may form an external shape of the electronic device 101.

According to an embodiment, the electronic device 101 may have a deformable form factor. Deformation of the electronic device 101 may mean that at least one of dimensions such as width, height, and/or thickness of the electronic device 101 is modified. At least one of the dimensions may be passively modified by an external force applied to the electronic device 101 and/or may be actively modified by one or more actuators included in the electronic device 101.

In order to support the deformability of the electronic device 101, the housing 210 may be divided into a first housing 211 and a second housing 212 that are interconnected. The electronic device 101 according to an embodiment may modify a shape of a flexible display 230 and/or the electronic device 101 by adjusting the positional relationship between the first housing 211 and the second housing 212 using an actuator (e.g., the actuator 150 of FIG. 1). Referring to FIGS. 2A to 2B, the flexible display 230 of the electronic device 101 may be positioned across a surface of the first housing 211 and a surface of the second housing 212. A surface, in which the flexible display 230 is positioned, and formed by the first housing 211 and the second housing 212 may be referred to as a front surface. According to an embodiment, changing the shape of the flexible display 230 by the electronic device 101 may include an operation of changing at least one of a breadth, a width, and/or extent of at least a portion exposed to an outside within the flexible display 230.

Referring to FIGS. 2A to 2B, an embodiment in which the second housing 212 is slidably coupled to the first housing 211 is illustrated. However, an embodiment is not limited thereto. The flexible display 230 may be insertable into the first housing 211 or extractable from the first housing 211 based on the deformation of the electronic device 101. In case that the flexible display 230 is inserted into the first housing 211, a size of an area in which the flexible display 230 is exposed to the outside may be reduced. In case that the flexible display 230 is extracted from the first housing 211, the size of the area in which the flexible display 230 is exposed to the outside may increase. Hereinafter, a displaying area of the flexible display 230 may mean an area formed by pixels positioned on the area in which the flexible display 230 is exposed to the outside among pixels included in the flexible display 230. For example, the displaying area may be referred to as an active area of the flexible display 230. According to an embodiment, the electronic device 101 may adjust the displaying area by inserting the flexible display 230 into the housing 210 or extracting the flexible display 230 from the housing 210 using an actuator (e.g., the actuator 150 of FIG. 1).

Referring to FIGS. 2A to 2B, different states 200 and 205 of the electronic device 101 and/or the flexible display 230 are illustrated. According to an embodiment, the electronic device 101 may switch between the states 200 and 205 using an actuator. In an embodiment, the states 200 and 205 of the electronic device 101 may be distinguished according to the dimensions (e.g., a width, a height, a thickness, and/or an aspect ratio) of the electronic device 101 and/or the flexible display 230. The states 200 and 205 may be distinguished according to a distance between the first housing 211 and the second housing 212 of the electronic device 101. For example, the distance between the first housing 211 and the second housing 212 may be a distance between a surface of the first housing 211 (e.g., an upper surface of the first housing 211) and the another surface of the second housing 212 (e.g., a lower surface of the second housing 212) parallel to the surface of the first housing 211 and spaced apart from the surface of the first housing 211.

Each of the states 200 and 205 of FIGS. 2A to 2B may be a state in which a surface area of the electronic device 101 and/or an extent of the displaying area of the flexible display 230 is minimized or maximized as the electronic device 101 is deformed. Hereinafter, a state in which the surface area of the electronic device 101 and/or the extent of the displaying area is minimized, such as the state 200, may be referred to as a slide-in state, a rolled state, a closed state, a roll-in state, and/or a contracted state. Hereinafter, a state in which the surface area of the electronic device 101 and/or the extent of the displaying area is maximized, such as the state 205, may be referred to as a slide-out state, an unrolled state, an opened state, a roll-out state, and/or an expanded state. In an embodiment, the state of the electronic device 101 may further include another state between the state 200 in which the extent of the displaying area is minimum and the state 205 in which the extent of the displaying area is maximum. The other state may be referred to as an intermediate state, a sub-rolled state, a free-stop state, and/or a sub-opened state.

Referring to FIGS. 2A to 2B, according to an embodiment, the flexible display 230 included in the electronic device 101 may have a rectangular shape. In an embodiment, corners of the flexible display 230 may have a rounded corner shape. Hereinafter, among the sides that are the boundaries of the rectangular flexible display 230, a first direction parallel to a relatively long side may be referred to as a height direction, and the relatively long side may be referred to as the height. Hereinafter, among the sides that are the boundaries of the rectangular flexible display 230, a second direction parallel to a relatively short side may be referred to as a width direction, and the relatively short side may be referred to as the width.

Referring to FIG. 2A, an embodiment in which the electronic device 101 deforms the shape of the electronic device 101 along the height direction, among the width direction or the height direction of the flexible display 230, is illustrated. A height h1 in the state 200 of FIG. 2A may be a minimum value of the height of the displaying area at a time point when an extent of a portion of the flexible display 230 exposed to the outside is minimized (e.g., the slide-in state). For example, with respect to a width w of the displaying area, a ratio of the height and the width in the state 200 may be 4.5:3. A height h2 of the flexible display 230 in the state 205 of FIG. 2A may be a maximum value of the height of the displaying area within a time point when the extent of the portion of the flexible display 230 exposed to the outside is maximized (e.g., the slide-out state). For example, with respect to the width w of the displaying area, a ratio of the height and the width in the state 205 may be 21:9. It may be the maximum value of the height of the deformable flexible display 230. Although not illustrated, the state of the electronic device 101 may include the states 200 and 205, as well as an intermediate state in which the ratio of the height and the width is 16:9.

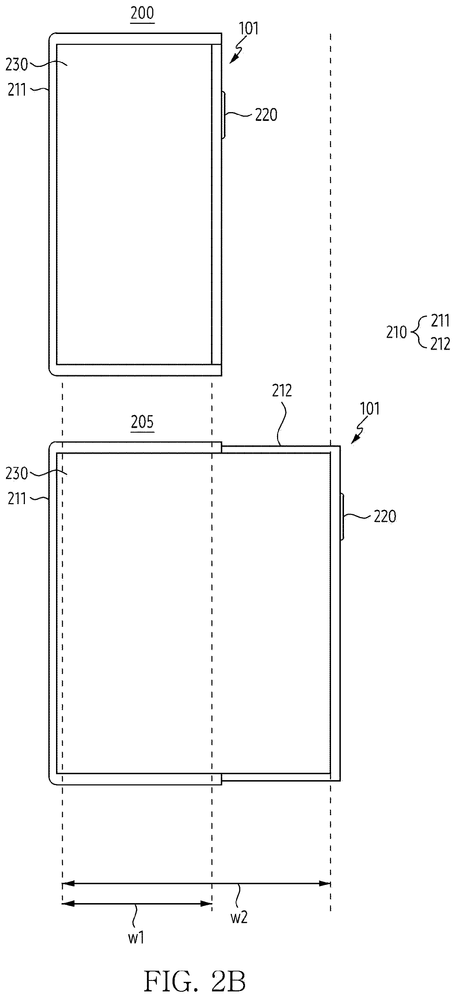

Referring to FIG. 2B, an embodiment in which the electronic device 101 deforms the shape of the electronic device 101 along the width direction, among the width direction or the height direction, is illustrated. Each of a width w1 in the state 200 and a width w2 in the state 205 of FIG. 2B may be a minimum value and a maximum value of the width of the deformable flexible display 230. As the height and/or the width of the flexible display 230 is adjusted, the electronic device 101 may modify an aspect ratio of the flexible display 230 to an aspect ratio suitable for content outputted from the electronic device 101. For example, the aspect ratio may be selected from 4.5:3, 16:9, and 21:9.

According to an embodiment, the electronic device 101 may identify a state corresponding to the current shape of the electronic device 101 among the states 200 and 205 and the intermediate state between the states 200 and 205, using one or more sensors (e.g., a Hall sensor). In an embodiment in which the electronic device 101 includes a Hall sensor, a magnet included in the Hall sensor may be positioned in the second housing 212, and one or more magnetic sensors included in the Hall sensor may be positioned in the first housing 211. In the above embodiment, the magnitude of a magnetic field, identified by each of the one or more magnetic sensors and generated by the magnet, may be modified according to the positional relationship between the second housing 212 and the first housing 211. In the above embodiment, the electronic device 101 may identify the shape of the electronic device 101 based on the magnitude of the magnetic field identified by the one or more magnetic sensors. The identification of the shape by the electronic device 101 may be performed based on an operating system and/or firmware running on a processor (e.g., the processor 120 of FIG. 1) of the electronic device 101. In case that a user deforms the housing 210, the electronic device 101 may obtain data indicating the deformation of the housing 210 due to a motion of the user based on the Hall sensor. The data may indicate a modification in the positional relationship between the first housing 211 and the second housing 212 due to the motion of the user. Based on the modification in the positional relationship, the electronic device 101 may identify a deformation of the housing 210 and/or a modification in the displaying area of the display 230 due to the deformation of the housing 210.

According to an embodiment, the electronic device 101 may modify the shape of the flexible display 230 and/or the electronic device 101 between the states 200 and 205 by activating the actuator. According to an embodiment, the electronic device 101 may modify the shape in response to identifying a preset event. For example, the preset event may include a software interrupt (SWI) generated from an operating system, firmware, and/or an application running on the electronic device 101. The software interrupt may be generated by an application for reproducing multimedia content (e.g., a video) having a specific aspect ratio. The software interrupt may be generated based on a position of the electronic device 101 identified by one or more sensors. The software interrupt may be generated based on a condition (e.g., a condition indicated by time, place, occasion, or a combination thereof) inputted by the electronic device 101 and/or the user.

In an embodiment, the preset event for modifying the shape of the flexible display 230 and/or the electronic device 101 may be generated based on a gesture of the user. For example, the preset event may be generated by a gesture performed on the flexible display 230. The gesture may include at least one of a pinch-to-zoom gesture, a swipe gesture, a drag gesture, or a gesture of tapping a preset visual object (e.g., an icon displaying the aspect ratio) displayed on the flexible display 230. For example, the gesture may be generated by a gesture of pressing a button 220 exposed to the outside in a portion of the housing 210 of the electronic device 101.

According to an embodiment, the electronic device 101 may include the button 220 for receiving an input for modifying the shape of the flexible display 230 and/or the electronic device 101. Referring to FIGS. 2A to 2B, the button 220 exposed to the outside in at least a portion of the housing 210 of the electronic device 101 is illustrated. In response to identifying the gesture of pressing the button 220, the electronic device 101 may identify the input by the user. In an embodiment in which the button 220 is mapped to a plurality of functions (e.g., a power management function and/or a fingerprint recognition function), the electronic device 101 may identify the input based on a pressure applied to the button 220, duration in which an external object (e.g., a fingertip of the user) is in contact with the button 220, and/or duration in which the button 220 is pressed. For example, a first gesture of pressing the button 220 for more than a preset period (e.g., 5 seconds) may be matched to an input of turning on or off the electronic device 101. In the above example, a second gesture of pressing the button 220 shorter than the preset period may be matched to an input for modifying the shape.

Referring to an embodiment of FIG. 2A, the button 220 may be exposed to the outside through an upper surface of the second housing 212. Referring to FIG. 2B, the button 220 may be exposed to the outside through a side surface of the second housing 212. A position of the button 220 is not limited to the examples of FIG. 2A and/or FIG. 2B.

In an embodiment, the preset event for modifying the shape of the flexible display 230 and/or the electronic device 101 may occur based on the electronic device 101 receiving a voice signal including a preset word and/or sentence. Although not illustrated, the electronic device 101 may obtain the voice signal using one or more microphones. The preset event may occur in response to the electronic device 101 receiving a wireless signal from an external electronic device (e.g., a pointing device such as a remote control and/or a digitizer, which are wirelessly connected to the electronic device 101). The wireless signal may be transmitted from the external electronic device to the electronic device 101 based on the gesture of the user identified through the external electronic device. The gesture identified by the external electronic device may include, for example, at least one of a movement along a preset trajectory of the external electronic device and/or a gesture of pressing a button of the external electronic device. The trajectory may be referred to as a path.

According to an embodiment, the electronic device 101 may control different cameras included in the electronic device 101 based on the variability of the flexible display 230. For example, the electronic device 101 may selectively activate at least one of the cameras based on the size of the displaying area of the flexible display 230. In response to an external force applied to the first housing 211 and/or the second housing 212 , and/or an input indicating modifying the size of the displaying area by activating an actuator included in the electronic device 101, the electronic device 101 may selectively activate at least one of the cameras. Selectively activating at least one of the cameras by the electronic device 101 may be related to a size and/or an aspect ratio of a preview image displayed in the displaying area of the flexible display 230 based on the at least one activated camera. For example, the electronic device 101 may selectively activate at least one of the cameras such that the preview image has a size, dimension, and/or aspect ratio corresponding to the modified size of the displaying area. The electronic device 101 may adjust a magnification for at least one activated camera, or may perform a crop on frames obtained through the at least one camera.

As described above, the electronic device 101 according to an embodiment may execute one or more functions associated with a plurality of cameras in the electronic device 101 such that the preview image has the size, dimension, and/or aspect ratio corresponding to the modified size of the displaying area based on the modification in the size of the displaying area of the flexible display 230. The one or more functions may include selective activation of at least one of the plurality of cameras, adjustment of a magnification such as zoom-in and/or zoom-out of at least one of the plurality of cameras, and/or a crop for frames outputted from at least one of the plurality of cameras. The electronic device 101 may execute the one or more functions based on scene analysis of frames obtained through at least one activated camera. Based on the execution of the one or more functions, the electronic device 101 may display a preview image that fits into the displaying area of the flexible display 230. For example, an area formed between the preview image and the displaying area, such as a letterbox, may be removed based on the execution of the one or more functions.

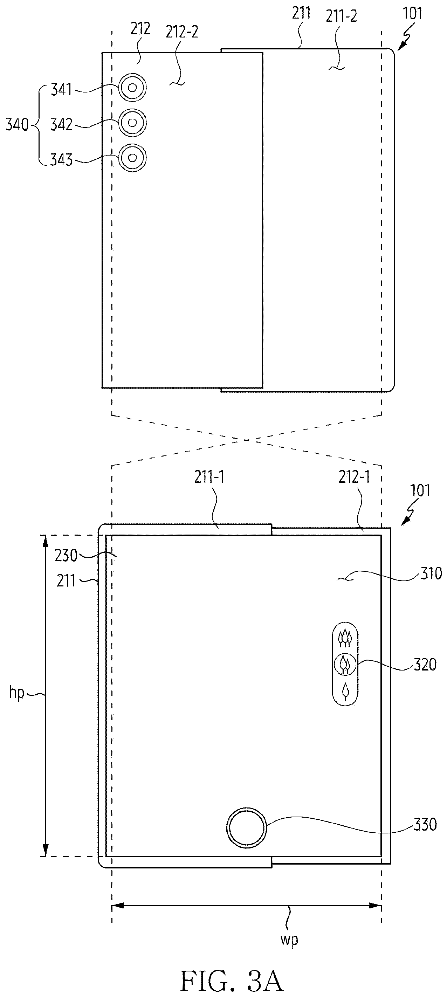

Hereinafter, with reference to FIGS. 3A to 3B, an example of an operation in which the electronic device 101 according to an embodiment displays a preview image based on cameras having different field-of-views (FoVs) will be described.

FIGS. 3A to 3B illustrate an example of an operation in which an electronic device 101 displays a preview image based on cameras 340 having different FoVs, according to an embodiment. The electronic device 101 of FIGS. 3A to 3B may be an example of the electronic device 101 of FIGS. 1 to 2. For example, the electronic device 101, the first housing 211, the second housing 212, and/or the flexible display 230 of FIGS. 1 to 2 may include the electronic device 101, a first housing 211, a second housing 212, and/or a flexible display 230 of FIGS. 3A to 3B.

Referring to FIG. 3A, the appearance of the electronic device 101 viewed from different surfaces of the first housing 211 and the second housing 212 that are slidably coupled is illustrated. The first housing 211 and/or the second housing 212 may be referred to as a housing of the electronic device 101. The flexible display 230 in the electronic device 101 may be positioned across a first surface 211-1 of the first housing 211 and a first surface 212-1 of the second housing 212. The first surface 211-1 of the first housing 211 and the first surface 212-1 of the second housing 212 may be referred to as a front surface of the electronic device 101. The flexible display 230 may be insertable into the housing (e.g., the first housing 211 and/or the second housing 212) of the electronic device 101 or may be extractable from the housing.

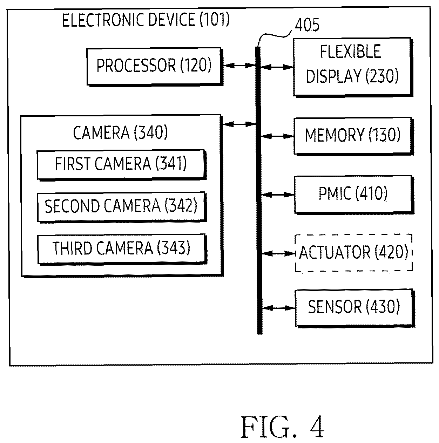

The electronic device 101 according to an embodiment may include a plurality of cameras 340 exposed to an outside through a surface of the housing of the electronic device 101. Referring to FIG. 3A, an embodiment of the electronic device 101 including a first camera 341 to a third camera 343 exposed to the outside through a second surface 212-2 of the second housing 212 is illustrated. However, the embodiment is not limited thereto, and the first camera 341 to the third camera 343 may be exposed to the outside through at least a portion of a second surface 211-2 of the first housing 211. The second surface 212-2 of the second housing 212 in which the first camera 341 to the third camera 343 are positioned may be referred to as a rear surface of the electronic device 101. Referring to FIG. 3A, the rear surface of the electronic device 101 may include the second surface 211-2 of the first housing 211 that forms substantially the same plane as the second surface 212-2 of the second housing 212. One or more hardware included in the electronic device 101 to control the cameras 340 and the flexible display 230 will be described with reference to FIG. 4.

Referring to FIG. 3A, an embodiment in which the first housing 211 and the second housing 212 of the electronic device 101 are coupled along a width direction among a height direction or the width direction is illustrated. Since the first housing 211 and the second housing 212 are coupled along the width direction, the flexible display 230 may be extracted from the first housing 211 or may be inserted into the first housing 211 along the width direction. In the flexible display 230, at least a portion extracted from the housing (e.g., the first housing 211) may form a displaying area 310. Referring to FIG. 3A, a length of the displaying area 310 along the height direction may be referred to as a height hp, and a length of the displaying area 310 along the width direction may be referred to as a width wp. As the flexible display 230 is extracted from the first housing 211 or inserted into the first housing 211 along the width direction, the width wp of the displaying area 310 may be modified.

According to an embodiment, the electronic device 101 may include a sensor for detecting a size of the displaying area 310. In an embodiment of FIG. 3A, in which the first housing 211 and the second housing 212 are slidably coupled to each other along the width direction, the electronic device 101 may obtain information associated with the size of the displaying area 310 such as the width wp of the displaying area 310 by using the sensor. The electronic device 101 may selectively activate at least one of the cameras 340 based on the size of the displaying area 310.

The electronic device 101 according to an embodiment may control the cameras 340 based on execution of a preset application, such as a camera application. Controlling the cameras 340 may include activating or enabling at least one of the cameras 340. The camera being activated may include a state of outputting frames based on driving of an image sensor included in the camera. The camera being activated may include a state in which a bitstream including the frames is outputted from the activated camera. The camera being activated may include a state in which a voltage and/or current inputted to the camera has increased beyond a preset threshold based on driving of the camera. The camera being deactivated may include a state in which output of frames by the camera is at least temporarily stopped. The camera being deactivated may include a state in which the voltage and/or current inputted to the camera is reduced to less than the preset threshold. Among the cameras 340, an activated camera may repeatedly output frames including an image of an external space according to a frame rate.

According to an embodiment, the electronic device 101 may display a preview image in the displaying area 310 based on frames outputted from the activated camera. In a state of displaying the preview image, the electronic device 101 may display a visual object 330 for receiving a shooting input. The visual object 330 may include an icon having a shutter shape. In the state of displaying the preview image, the electronic device 101 may display a visual object 320 for selecting a camera corresponding to the preview image from among the cameras 340. The visual object 320 may have the form of a menu including different icons. The icons included in the visual object 320 may correspond to each of the cameras 340 of the electronic device 101. In response to receiving an input that indicates selecting the cameras 340 through the visual object 320, the electronic device 101 may display the preview image in the displaying area 310 based on frames of a camera selected by the input among the cameras 340.

The electronic device 101 according to an embodiment may identify the size of the displaying area 310 within a state of controlling the cameras 340. Based on the identified size of the displaying area 310, the electronic device 101 may selectively activate at least one of the cameras 340. In an embodiment in which the cameras 340 have different FoVs, the electronic device 101 may individually activate or deactivate the cameras 340 by comparing the FoVs and the size of the displaying area 310. Referring to FIG. 3A, the FoVs of the cameras 340 may at least partially superimposed. For example, the FoV of the first camera 341 may be included in the FoVs of the second camera 342 and the third camera 343. For example, the FoV of the second camera 342 may include the FoV of the first camera 341 among the FoV of the first camera 341 and the FoV of the third camera 343. For example, the FoV of the third camera 343 may include FoVs of the first camera 341 to the second camera 342. Within a state of activating at least one of the cameras 340, the electronic device 101 may execute one or more functions (e.g., zoom-in, zoom-out, and/or crop) associated with the at least one activated camera based on a subject and/or scene captured by the at least one activated camera. For example, the electronic device 101 may selectively activate the cameras 340 or execute the one or more functions in order to obtain a preview image having a size that matches the size of the displaying area 310.

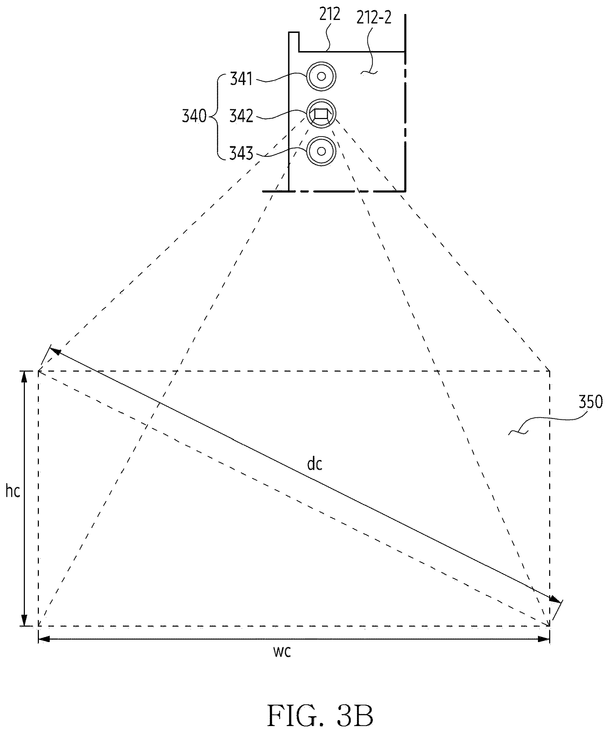

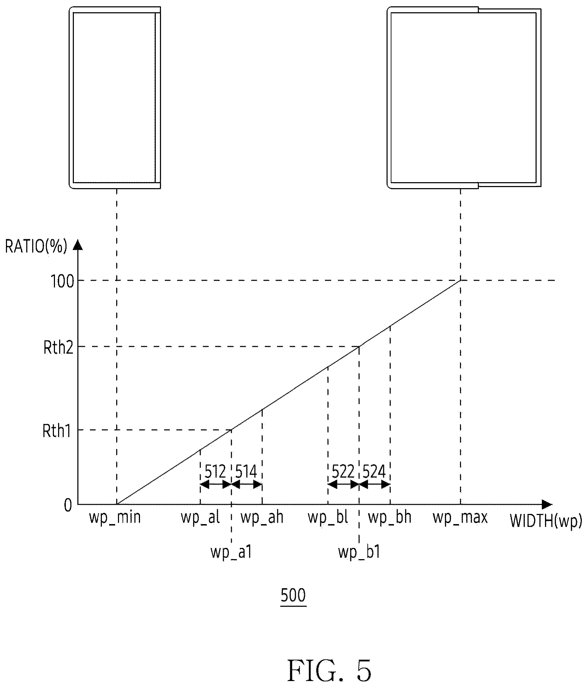

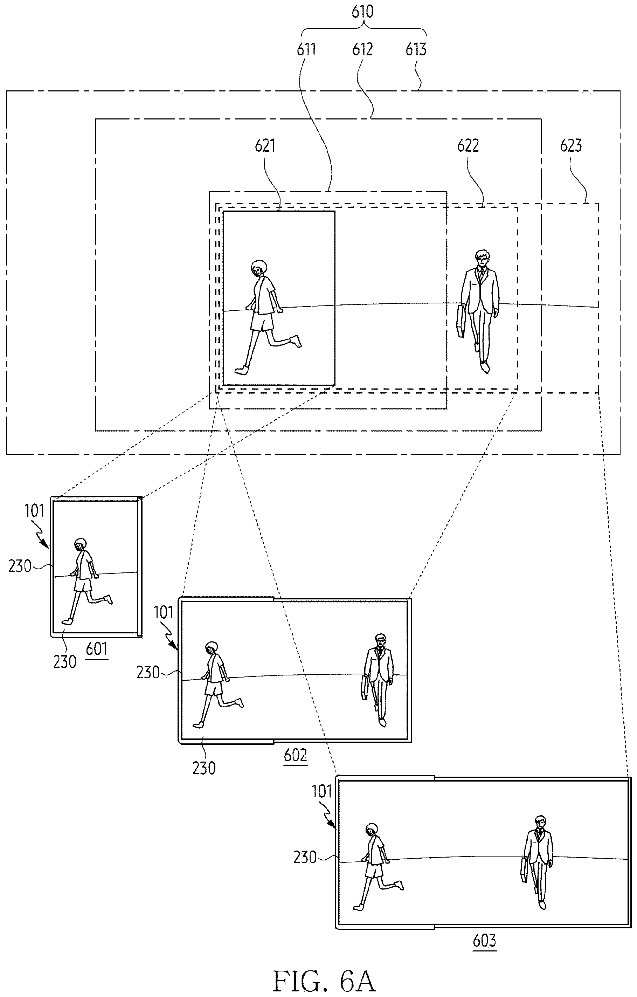

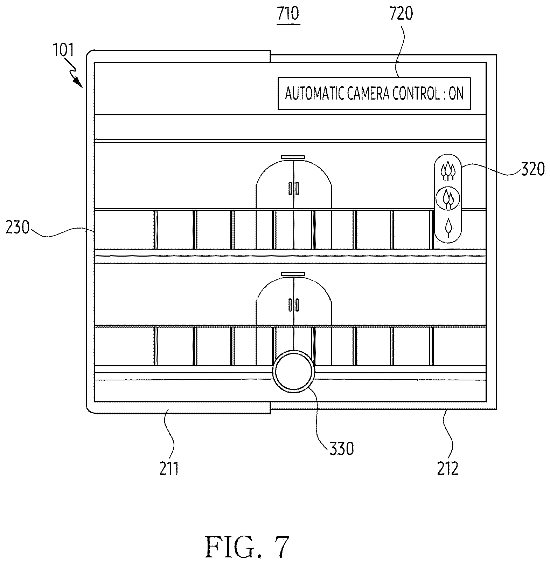

The electronic device 101 according to an embodiment may identify different FoVs of the cameras 340. The FoVs of the cameras 340 may be stored in memory (e.g., the memory 130 of FIG. 1) of the electronic device 101. FIG. 3B is an exemplary diagram for explaining the FoVs of the cameras 340 of FIG. 3A. Referring to FIG. 3B, a FoV 350 of the second camera 342 among the cameras 340 in the electronic device 101 is exemplarily illustrated. According to an embodiment, the electronic device 101 may identify at least one of a horizontal angle wc of the FoV 350, a vertical angle hc of the FoV 350, or a diagonal angle dc of the FoV 350 as information indicating the FoV 350 of the second camera 342. Similarly, the electronic device 101 may identify the FoVs of the cameras 340. According to an embodiment, the electronic device 101 may selectively activate the cameras 340 by comparing the FoVs of the cameras 340 appearing based on parameters such as the angles wc, hc, and dc, and the size of the displaying area 310. An operation in which the electronic device 101 according to an embodiment selectively activates the cameras 340 based on the FoVs and the size of the displaying area 310 will be described with reference to FIG. 5. An operation in which the electronic device 101 displays a preview image based on at least one selectively activated camera among the cameras 340 will be described with reference to FIGS. 6A to 6C, and/or 7.

Hereinafter, one or more hardware included in the electronic device 101 according to an embodiment will be described with reference to FIG. 4.

FIG. 4 illustrates an example of hardware included in an electronic device 101 according to an embodiment. The electronic device 101 of FIG. 4 may include the electronic device 101 of FIGS. 1 to 2, and 3A to 3B. The electronic device 101 may include at least one of a processor 120, memory 130, a flexible display 230, cameras 340, a power management integrated circuit (PMIC) 410, an actuator 420, or a sensor 430. Referring to FIG. 4, an example of a block diagram of the electronic device 101 including the actuator 420 is illustrated, but the embodiment is not limited thereto. The processor 120, the memory 130, the flexible display 230, the cameras 340, the PMIC 410, the actuator 420, and the sensor 430 may be electronically and/or operably coupled with each other by an electronical component such as a communication bus 405. Hereinafter, the hardware being operably coupled may mean that a direct or an indirect connection between the hardware is established, wired or wireless, so that second hardware is controlled by first hardware among the hardware. Although illustrated based on different blocks, the embodiment is not limited thereto, and a portion of the hardware (e.g., at least a portion of the processor 120, the memory 130, and/or the PMIC 410) illustrated in FIG. 4 may be included in a single integrated circuit such as a system on a chip (SoC). A type and/or the number of hardware components included in the electronic device 101 is not limited as illustrated in FIG. 4. For example, the electronic device 101 may include only some of the hardware components illustrated in FIG. 4.

The processor 120 of the electronic device 101 according to an embodiment may include a hardware component for processing data based on one or more instructions. The hardware component for processing data may include, for example, an arithmetic and logic unit (ALU), a floating point unit (FPU), a field programmable gate array (FPGA), an application processor (AP), and/or a central processing unit (CPU). The number of processors 120 may be one or more. For example, the processor 120 may have a structure of a multi-core processor such as a dual core, a quad core, or a hexa core. The processor 120 of FIG. 4 may include the processor 120 of FIG. 1.

According to an embodiment, the memory 130 of the electronic device 101 may include a hardware component for storing data and/or instruction inputted to and/or outputted from the processor 120. The memory 130 may include, for example, volatile memory such as random-access memory (RAM), and/or non-volatile memory such as read-only memory (ROM). The volatile memory may include, for example, at least one of dynamic RAM (DRAM), static RAM (SRAM), cache RAM, and pseudo SRAM (PSRAM). The non-volatile memory may include, for example, at least one of programmable ROM (PROM), erasable PROM (EPROM), electrically erasable PROM (EEPROM), a flash memory, a hard disk, a compact disk, a solid state drive (SSD), and an embedded multi media card (eMMC). The memory 130 of FIG. 4 may include the memory 130 of FIG. 1.

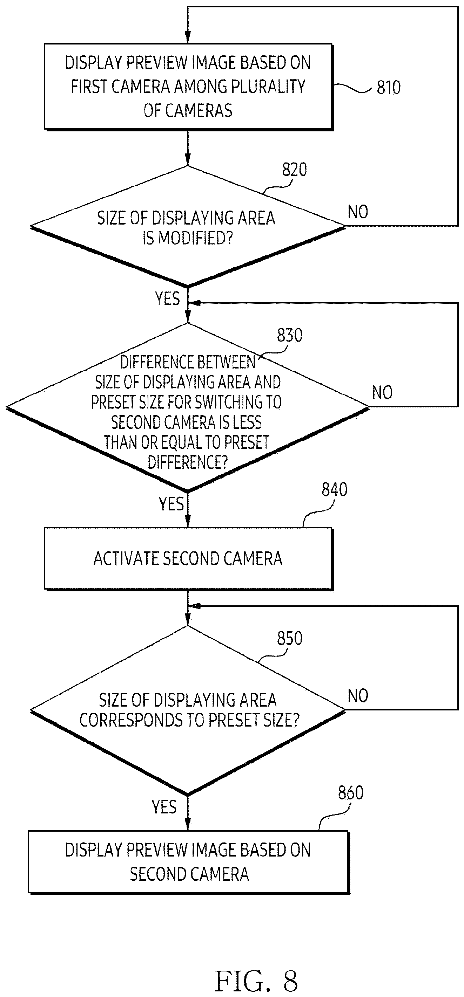

In the memory 130, one or more instructions (or commands) indicating calculation and/or operation to be performed by the processor 120 on data may be stored. A set of one or more instructions may be referred to as firmware, an operating system, a process, a routine, a sub-routine, and/or an application. For example, the electronic device 101 and/or the processor 120 may perform at least one of operations of FIGS. 8 to 9 when a set of a plurality of instructions distributed in a form of an operating system, firmware, driver, and/or application is executed. Hereinafter, the fact that an application is installed in the electronic device 101 may mean that one or more instructions provided in the form of the application are stored in the memory 130 of the electronic device 101, and the one or more applications are stored in an executable format (e.g., a file with an extension preset by the operating system of the electronic device 101) by the processor 120 of the electronic device 101.

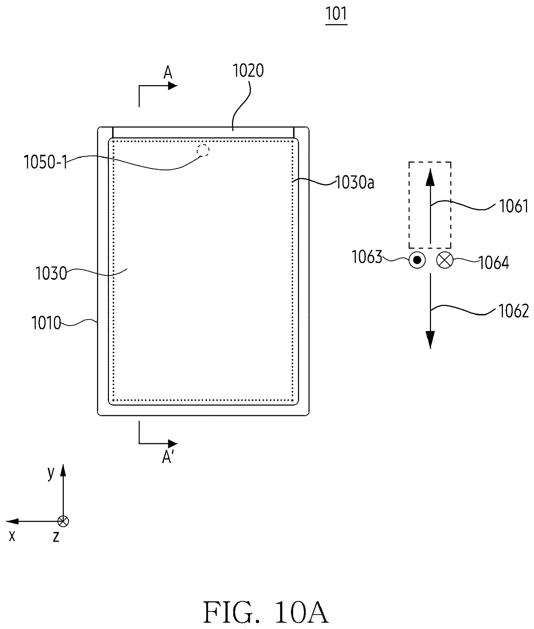

According to an embodiment, the flexible display 230 of the electronic device 101 may output visualized information to a user. The flexible display 230 may be deformable by an external force applied to the flexible display 230. The flexible display 230 may include a liquid crystal display (LCD), a plasma display panel (PDP), one or more light emitting diodes (LEDs), and/or one or more OLEDs. In order to deform a shape of the flexible display 230, an exemplary structure of the electronic device 101 will be described with reference to FIGS. 10A to 10D, 11A to 11B, and/or 12A to 12B.

According to an embodiment, each of the cameras 340 of the electronic device 101 may include one or more optical sensors (e.g., a charged coupled device (CCD) sensor and a complementary metal oxide semiconductor (CMOS) sensor) that generate an electrical signal indicating a color and/or brightness of light. A plurality of optical sensors included in each of the cameras 340 may be positioned in a form of a 2 dimensional array. Each of the cameras 340 may generate 2 dimensional frame data corresponding to light reaching the optical sensors of the 2 dimensional array by obtaining the electrical signal of each of the plurality of optical sensors substantially simultaneously. The 2 dimensional frame data may be referred to as a frame. In an embodiment, photo data may mean an image at a moment obtained by the electronic device 101 based on at least one frame obtained based on the cameras 340. In an embodiment, video data may mean a sequence of frames obtained based on the cameras 340.

Referring to FIG. 4, an embodiment in which the electronic device 101 includes three cameras (e.g., a first camera 341 to a third camera 343) is illustrated, but the embodiment is not limited thereto. The number of cameras included in the electronic device 101 is not limited to an embodiment of FIG. 4. The first camera 341 to the third camera 343 may be distinguished by the processor 120 based on different identifiers (e.g., a sensor ID). The first camera 341 to the third camera 343 may have different FoVs because they are exposed to an outside through different portions of a housing of the electronic device 101. A FoV of a specific camera is an area formed based on a view angle in which a lens of the specific camera may receive light, and may correspond to an area corresponding to an image generated based on the specific camera. Hereinafter, a subject may mean an object included in the FoV of the specific camera and distinguished from the electronic device 101. According to an embodiment, the electronic device 101 may selectively activate the cameras 340 having FoVs that at least partially overlap each other.

Referring to FIG. 4, the PMIC 410 in the electronic device 101 may transmit a power signal to each hardware (e.g., the processor 120, the memory 130, the flexible display 230, the cameras 340, the actuator 420, and/or the sensor 430) in the electronic device 101. The PMIC 410 may generate the power signal required to drive different hardware in the electronic device 101 based on power received through a battery (e.g., the battery 189 of FIG. 1) and/or a power distribution system connected to the electronic device 101. Among the cameras 340, at least one camera activated by the processor 120 may receive a power signal having a voltage exceeding a preset threshold from the PMIC 410. Other cameras different from the at least one camera among the cameras 340 may receive a power signal having a voltage less than the preset threshold from the PMIC 410.

Referring to FIG. 4, according to an embodiment, the electronic device 101 may include an actuator 420 for deforming the flexible display 230 and/or the housing of the electronic device 101. The actuator 420 may be referred to as a driving unit. The actuator 420 may include hardware (e.g., a motor) for outputting kinetic energy from electrical energy. In an embodiment in which the actuator 420 includes a motor, the actuator 420 may include a gear (e.g., a rack gear) for modifying a rotational motion of the motor into a linear motion (or translation motion) applied to the flexible display 230. In an embodiment, the actuator 420 may include a plurality of gears engaged to each other to adjust the rotational force (e.g., torque) of the motor. The plurality of gears may be referred to as a gear assembly or a transmission unit of the actuator 420.

According to an embodiment, the sensor 430 of the electronic device 101 may generate electronic information that may be processed by the processor 120 and/or the memory 130 from non-electronic information related to the electronic device 101. The electronic information generated by the sensor 430 may be stored in the memory 130, processed by the processor 120, and/or transmitted to another electronic device distinct from the electronic device 101. For example, the sensor 430 may include an acceleration sensor for obtaining data related to the shape of the housing of the electronic device 101 and/or the flexible display 230. The processor 120 of the electronic device 101 may identify a posture and/or the shape of the electronic device 101 in a physical space based on the data outputted from the acceleration sensor. The posture and/or the shape identified by the electronic device 101 may indicate the orientation of the electronic device 101 measured by the sensor 430 and/or the shape of the electronic device 101 (e.g., the shape of the electronic device 101 described above with reference to FIGS. 2A to 2B).

In an embodiment, the sensor 430 in the electronic device 101 may include a Hall sensor. The shape of the electronic device 101 may be measured by the Hall sensor. The Hall sensor may include a magnet and a magnetic field sensor that measures a change in a magnetic field formed by the magnet. The magnet and the magnetic field sensor may be positioned in different portions (e.g., the first housing 211 and the second housing 212 of FIG. 3A) of the housing of the electronic device 101. Based on the change in the magnetic field measured by the magnetic field sensor, the Hall sensor may identify a distance between the portions. In an embodiment in which the electronic device 101 includes a deformable housing, the electronic device 101 may identify the shape of the housing using the magnet positioned in different portions of the housing and a Hall sensor including the magnetic field sensor. For example, the Hall sensor may output sensor data indicating the distance and/or a shape of the housing.

In an embodiment in which the electronic device 101 includes a plurality of housings slidably coupled, such as the first housing 211 and the second housing 212 of FIGS. 3A to 3B, the electronic device 101 may identify a distance at which the plurality of housings are spaced apart by using the sensor 430. In case that the plurality of housings are connected based on a rotary shaft, the electronic device 101 may identify the distance at which the plurality of housings are spaced apart based on the number of rotations of a motor connected to the rotary shaft and/or a moving distance of a member (e.g., multi-bar) connected to the rotary shaft. Based on the identified distance, the electronic device 101 may identify a size of a displaying area of the flexible display 230.

According to an embodiment, the electronic device 101 may identify the size of the displaying area of the flexible display 230 based on the sensor 430. The electronic device 101 may selectively activate at least one of the cameras 340 based on the identified size of the displaying area. A preview image displayed by the electronic device 101 on the flexible display 230 may be associated with at least a portion of frames outputted from an activated camera. The electronic device 101 may determine at least a portion of frames segmented to display the preview image based on scene analysis and/or subject recognition based on the frames. The electronic device 101 may perform the scene analysis and/or the subject recognition in response to identifying the change in the size of the displaying area based on the sensor 430.

Based on identifying that the size of the displaying area of the flexible display 230 is modified, the electronic device 101 according to an embodiment may identify a camera corresponding to the modified size among the cameras 340. For example, the processor 120 may identify at least one camera corresponding to the size of the displaying area among the cameras 340 based on information stored in the memory 130. The information may include a matching table, which matches different sizes of the displaying area to at least one camera among the cameras 340. The information and/or the matching table may be stored in the memory 130 by a vendor of the electronic device 101. The information may include information associated with the size of the displaying area, for example, a maximum size and/or a minimum size of the displaying area of the flexible display 230. The information may include information indicating FoVs of each of the cameras 340. As the size of the displaying area is modified, a camera matching the size modified by the information, such as the matching table, may be switched among the cameras 340. According to an embodiment, the electronic device 101 may switch a camera for a preview image displayed in the displaying area based on switching of the camera according to a modification of the size of the displaying area.

In a state of switching a camera associated with a preview image among the cameras 340, the electronic device 101 according to an embodiment may perform scene analysis and/or subject recognition on frames received from the switched camera. Based on a result of performing the scene analysis and/or the subject recognition, the electronic device 101 may adjust a zoom level of the camera. Based on the adjusted zoom level, the electronic device 101 may display a preview image associated with the camera. The zoom level may be adjusted by the processor 120 such that a preview image having a size corresponding to the size of the displaying area is displayed on the flexible display 230. Based on a category of one or more subjects included in the preview image displayed in the flexible display 230, the zoom level may be adjusted by the processor 120 such that the composition of the preview image with respect to the one or more subjects is adjusted.

As described above, the electronic device 101 according to an embodiment may identify at least one camera for displaying a preview image among the cameras 340 based on the size and/or an aspect ratio of the displaying area of the flexible display 230. For example, in the displaying area of the flexible display 230 having a first size, the processor 120 may display a preview image based on the first camera 341 having a FoV corresponding to the first size among the cameras 340. In response to an input indicating modifying the size of the displaying area to a second size different from the first size, the processor 120 may identify the size of the displaying area by using the sensor. The processor 120 may activate a second camera 342 having a FoV corresponding to the second size among the cameras 340, based on identifying that a difference between the size of the displaying area and the second size is less than or equal to a preset difference using the sensor, within a state in which the size of the displaying area is modified based on the input. The processor 120 may display the preview image based on the activated second camera 342 among the first camera 341 and the second camera 342, based on identifying that the size of the displaying area is modified to the second size by the input. The processor 120 may selectively activate at least one of the cameras 340 based on the size of the displaying area to display a preview image corresponding to the size in the displaying area.

Hereinafter, with reference to FIG. 5, an example of an operation in which the electronic device 101 according to an embodiment selectively activates at least one of the cameras 340 based on a size of the displaying area will be described.

FIG. 5 illustrates an example of an operation in which an electronic device activates different cameras based on a size of a displaying area of a flexible display, according to an embodiment. The electronic device of FIG. 5 may be an example of the electronic device 101 of FIG. 4. For example, the electronic device 101, the flexible display 230, and the cameras 340 of FIG. 4 may include the electronic device, the flexible display, and cameras of FIG. 5.

Referring to FIG. 5, in an embodiment including a flexible display that is deformable along a width direction of the electronic device, a graph 500 associated with a width wp of a displaying area due to the deformation of the flexible display is illustrated. For example, a ratio of the graph 500 with respect to a minimum width (wp_min) and a maximum width (wp_max) that the width wp of the displaying area may have due to the deformation of the flexible display may be indicated based on Equation 1.

【Equation 1】

$$\text{Ratio} = \frac{wp - wp\_min}{wp\_\max - wp\_min} \times 100 \ (\%)$$

The ratio of the Equation 1 may indicate the ratio of the width wp of the displaying area within a preset range formed by the minimum width wp_min and the maximum width wp_max. The width wp of the displaying area may be identified based on a sensor (e.g., the sensor 430 of FIG. 4). Referring to the Equation 1 and the graph 500 of FIG. 5, in a roll-in state such as the state 200 of FIGS. 2A to 2B, since the width wp of the displaying area has the minimum width wp_min, the ratio may be 0%. In a roll-out state such as the state 205 of FIGS. 2A to 2B, since the width wp of the displaying area has the maximum width wp_max, the ratio may be 100%.

According to an embodiment, the electronic device may display a preview image in a displaying area having the same ratio as the Equation 1 based on frames outputted from at least one of a plurality of cameras (e.g., the cameras 340 of FIG. 3). The electronic device may obtain the size of the displaying area and/or the ratio of the Equation 1 by using the sensor based on execution of a preset application (e.g., a camera application) for displaying the preview image. Among the plurality of cameras, the electronic device may identify a camera having a FoV corresponding to the size of the displaying area of the flexible display extracted from a housing. The electronic device may identify FoVs of each of the plurality of cameras exposed to an outside through a surface of the housing. For example, information associated with the FoVs may be stored in memory (e.g., the memory 130 of FIG. 4) of the electronic device. Table 1 may include an example of the information stored in the memory of the electronic device.

[Table 1]

| aspect ratio | direction | first camera (e.g., tele camera) | second camera (e.g., wide camera) | third camera (e.g., ultra-wide camera) |
|---|---|---|---|---|
| 4:3 | diagonal | 46 | 87 | 136 |
| | horizontal | 40 | 80 | 120 |
| | vertical | 22 | 58 | 85 |
| 16:9 | diagonal | 34 | 80 | 112 |
| | horizontal | 30 | 68 | 102 |
| | vertical | 17 | 54 | 69 |
| 1:1 | diagonal | 31 | 76 | 106 |
| | horizontal | 22 | 58 | 85 |
| | vertical | 22 | 58 | 85 |

The numerical values in Table 1 may be values representing an angle of a FoV of a camera corresponding to a column in which the numerical value is written, in a direction corresponding to a row in which the numerical value is written.

Referring to FIG. 3B and Table 1, a diagonal angle dc of a FoV 350 of a second camera 342, which is a wide camera, may be 87 °. Similarly, a horizontal angle wc and a vertical angle hc of the FoV 350 of the second camera 342 of FIG. 3B may be 80 ° and 58 °, respectively. Referring to Table 1, the FoVs of the cameras included in the electronic device may have different angles according to the aspect ratio. According to an embodiment, the electronic device may select a camera among the cameras by comparing the FoVs of the cameras and the size of the displaying area identified based on information corresponding to Table 1. Based on at least a portion of frames obtained from the selected camera, the electronic device may display a preview image in the displaying area. Hereinafter, it is assumed that the electronic device includes a flexible display that is deformable along the width direction and cameras having an aspect ratio of 4:3. Hereinafter, based on the assumption, an operation in which the electronic device according to an embodiment selectively activates at least one of the cameras according to a size of the displaying area of the flexible display will be described.

According to an embodiment, the electronic device may obtain a ratio (e.g., the ratio of the Equation 1) between the size of the displaying area and a maximum size of the size of the displaying area based on an extract of the flexible display. Based on the obtained ratio, the electronic device may select a camera among the plurality of cameras as a camera for displaying the preview image. For example, the electronic device may identify ratio intervals distinguished by ratios of a maximum FoV and other FoVs among the FoVs of the plurality of cameras.

In the above assumption, the electronic device may identify the ratio intervals based on the angles (40, 80, 120, referring to Table 1) of FoVs in a horizontal direction parallel to the width direction in which the flexible display is deformed. The ratio intervals may correspond to different cameras included in the electronic device. For example, among the first to third cameras in Table 1, a first ratio interval corresponding to the first camera having the minimum FoV in the horizontal direction may be formed within 0% to 33% (e.g., (40/120) X 100 = 33%). A second ratio interval corresponding to the second camera having a larger FoV than the first camera and a smaller FoV than the third camera may be formed within 33% to 66% (e.g., (80 / 120) X 100 = 66%). A third ratio interval corresponding to the third camera may be formed within 66% to 100%. In the graph 500 of FIG. 5, Rth1 is assumed to be a boundary (e.g., 33%) between the first ratio interval to the second ratio interval. Similarly, in the graph 500, Rth2 is assumed to be a boundary (e.g., 66%) between the second ratio interval to the third ratio interval. Among the ratio intervals, the electronic device may obtain frames for displaying a preview image by controlling a camera corresponding to a ratio interval associated with the width wp of the displaying area. Referring to the graph 500 of FIG. 5, each of the widths wp_a1 and wp_b1 of the displaying area may correspond to the Rth1 and the Rth2.

Among ratio intervals formed by the ratios of FoVs, the electronic device according to an embodiment may select the camera for displaying the preview image based on a ratio interval including the ratio between the size of the displaying area and the maximum size. Displaying a preview image by the electronic device may include an operation of obtaining one or more frames from the selected camera. Displaying a preview image by the electronic device may include an operation of displaying at least a portion of the obtained one or more frames as the preview image. The electronic device may compare the ratio of the width wp of the displaying area within a preset range of the Equation 1 and the ratio of the FoVs of the cameras corresponding to a deformable direction (the width direction, in the assumption) of the flexible display. Based on a result of comparing the ratios, the electronic device may activate at least one camera. In the above assumption, in case that the width wp of the displaying area has the minimum width wp_min, since the ratio of the Equation 1 is 0%, the electronic device may display a preview image by activating the first camera corresponding to the first ratio interval. In the above assumption, in case that the ratio of the Equation 1 based on the width wp of the displaying area is 50%, the electronic device may display a preview image by activating the second camera corresponding to the second ratio interval including 50%. In the above assumption, in case that the width wp of the displaying area has the maximum width wp_max, since the ratio of the Equation 1 is 100%, the electronic device may display a preview image by activating the third camera corresponding to the third ratio interval.

Based on identifying that the size of the displaying area is modified in a state of displaying a preview image, the electronic device according to an embodiment may modify the activated camera to display the preview image based on the modified size. The modification of the camera may be performed based on a specific ratio interval corresponding to the modified size of the displaying area among preset ratio intervals corresponding to each of the plurality of cameras, and a camera corresponding to the specific ratio interval among the plurality of cameras.

In the above assumption, based on identifying that the width wp of the displaying area increases by exceeding the width wp_a1 corresponding to the boundary (Rth1 = 33%) between the first ratio interval and the second ratio interval in a state in which a preview image is displayed based on the first camera corresponding to the first ratio interval, the electronic device may display the preview image based on the second camera corresponding to the second ratio interval. Based on identifying that the width wp of the displaying area increases by exceeding the width wp_b1 corresponding to the boundary (Rth2 = 66%) between the second ratio interval and the third ratio interval in the state in which the preview image is displayed based on the second camera corresponding to the second ratio interval, the electronic device may display the preview image based on the third camera corresponding to the third ratio interval. Based on identifying that the width wp of the displaying area is reduced to less than the width wp_b1 corresponding to the boundary (Rth2 = 66%) between the second ratio interval and the third ratio interval in the state in which the preview image is displayed based on the third camera corresponding to the third ratio interval, the electronic device may display the preview image based on the second camera corresponding to the second ratio interval. Similarly, based on identifying that the width wp of the displaying area is reduced to less than the width wp_a1 corresponding to the boundary (Rth1 = 33%) between the first ratio interval and the second ratio interval in the state of displaying the preview image based on the second camera corresponding to the second ratio interval, the electronic device may display the preview image based on the first camera corresponding to the first ratio interval.

According to an embodiment, the electronic device may activate two cameras corresponding to two ratio intervals distinguished by a specific boundary based on margins 512, 514, 522, and 524 associated with the boundaries Rth1 and Rth2 between the ratio intervals. Referring to FIG. 5, the margin 512 may be a ratio interval between a width wp_a1 within the first ratio interval, and the boundary wp_a1 between the first ratio interval and the second ratio interval, and may be a ratio interval in which both the first camera and the second camera are activated. In the state in which the preview image is displayed based on the first camera corresponding to the first ratio interval, in case that the width wp of the displaying area is included within the margin 512 associated with the width wp_a1 corresponding to the boundary Rth1 of the first ratio interval, the electronic device may activate the second camera corresponding to the second ratio interval adjacent to the first ratio interval based on the boundary Rth1. For example, based on identifying the width wp of the displaying area included within the margin 512 within the above state, the electronic device may activate the second camera together with the first camera activated to display the preview image. In case that the width wp of the displaying area is included within the margin 512, the electronic device may display the preview image based on frames outputted from the first camera, and refrain from displaying the preview image based on frames outputted from the second camera. For example, before the width wp of the displaying area increases to the width wp_a1 for displaying the preview image based on the second camera within the first ratio interval, the electronic device may activate the second camera corresponding to the second ratio interval in advance based on the margin 512. While the width wp of the displaying area is included within the margin 512, the electronic device may obtain, from both the first camera and the second camera, a bitstream indicating frames. In a case of identifying that the width wp of the displaying area increases by the width wp_a1 or more, within the margin 512, the electronic device may identify the frames outputted from the second camera, based on a bitstream corresponding to the second camera, among the bitstream. The identified frames may be used for displaying the preview image based on the second camera. Since the second camera is activated in advance, the electronic device may seamlessly modify the camera for displaying the preview image from the first camera to the second camera within a time point at which the width wp of the displaying area corresponds to the width wp_a1.

Referring to FIG. 5, the margin 514 may be a ratio interval between the boundary wp_a1 between the first ratio interval and the second ratio interval, and a width wp_ah within the second ratio interval, and may be a ratio interval in which both the first camera and the second camera are activated. In case that the width wp of the displaying area is included within the margin 514, the electronic device may display the preview image based on the second camera among the activated first camera and the second camera. The margin 522 may be a ratio interval between the boundary wp_b1 between the second ratio interval and the third ratio interval, and a width wp_b1 within the second ratio interval, and may be a ratio interval in which both the second camera and the third camera are activated. In case that the width wp of the displaying area is included within the margin 522, the electronic device may display the preview image based on the second camera among the activated second camera and the third camera. The margin 524 may be a ratio interval between the boundary wp_b1 between the second ratio interval and the third ratio interval, and a width wp_bh within the third ratio interval, and may be a ratio interval in which both the second camera and the third camera are activated. In case that the width wp of the displaying area is included within the margin 524, the electronic device may display the preview image based on the third camera among the activated second camera and the third camera.

As described above, according to an embodiment, the electronic device may control the cameras based on the ratio intervals and the margins 512, 514, 522, and 524 associated with a variable size (e.g., the width wp, in the assumption) of the displaying area. The electronic device may activate one or more cameras, among a plurality of cameras in the electronic device, based on the margins 512, 514, 522, and 524. The electronic device may modify a camera corresponding to the preview image among the plurality of cameras based on the boundaries Rth1 and Rth2 between the ratio intervals. Since the electronic device activates the camera for displaying the preview image in advance using the margins 512, 514, 522, and 524, switching of the camera with respect to the preview image may be completed more quickly.

According to an embodiment, the electronic device may activate the cameras based on the size of the displaying area, and modify a zoom level of the camera based on a subject (or a visual object) included in the frames obtained from the activated camera. Hereinafter, with reference to FIGS. 6A to 6C, an example of an operation in which the electronic device according to an embodiment modifies the zoom level of at least one activated camera based on the size of the displaying area will be described.

FIGS. 6A to 6C illustrate an example of an operation in which the electronic device 101 controls different cameras based on a size of a displaying area of a flexible display 230, according to an embodiment. The electronic device 101 of FIGS. 6A to 6C may be an example of the electronic device 101 of FIG. 4. For example, the electronic device 101, the flexible display 230, and the cameras 340 of FIG. 4 may include the electronic device 101, the flexible display 230, and cameras of FIGS. 6A to 6C.

According to an embodiment, the electronic device 101 may obtain information associated with frames within a state of obtaining the frames from at least one of the cameras (e.g., the cameras 340 of FIG. 3). The information may include a result of performing scene analysis and/or subject recognition on the frames. For example, the electronic device 101 may perform the scene analysis and/or the subject recognition based on a neural network such as a convolutional neural network (CNN), and/or one or more feature points included in each of the frames. Based on the scene analysis, the electronic device 101 may classify the frames within a preset category. For example, the preset categories may include a shot type such as a landscape, a person, a building, and/or a document. Based on the subject recognition, the electronic device 101 may identify a type of one or more subjects corresponding to one or more visual objects included in the frames. The type may include types of a body part of a person, such as a face and/or a hand, and/or different objects. According to an embodiment, the electronic device 101 may obtain a preview image by extracting at least a portion of the frames or controlling a zoom level of a camera based on information associated with the frames and the size of the displaying area.

Referring to FIGS. 6A to 6C, according to an embodiment, states 601, 602, 603, 631, 632, 633, 651, 652, and 653 are illustrated in which the electronic device 101 including a plurality of cameras (e.g., the first camera 341 to the third camera 343 of FIGS. 3A to 3B) displays a preview image at least based on the size of the displaying area. Selectively activating at least one of the plurality of cameras based on the modification in the size of the displaying area by the electronic device 101 may be performed based on the operation described above with reference to FIG. 5.

Referring to FIG. 6A, the states 601, 602, and 603 are illustrated in which the electronic device 101 according to an embodiment displays a preview image at least based on the size of the displaying area, while the cameras of the electronic device 101 are positioned toward an external space including one or more people. Each of the states 601, 602, and 603 may indicate a state in which each of the three cameras included in the electronic device is activated based on the size of the displaying area. For example, the state 601 may indicate a state in which a preview image is displayed based on a first camera having the smallest FoV 611 among FoVs 610 of the three cameras. The state 603 may indicate a state in which a preview image is displayed based on a third camera having the largest FoV 613 among the three cameras. The state 602 may indicate a state in which a preview image is displayed based on a second camera corresponding to a FoV 612.

In the state 601 of displaying a preview image based on the first camera, the electronic device 101 may identify a subject (e.g., a person) included in the FoV 611 based on frames outputted from the first camera. The electronic device 101 may obtain a portion 621 including the identified subject within the frames by adjusting the zoom level for the frames or performing a crop on the frames based on the identified subject. The portion 621 may have the size of the displaying area of the flexible display 230 of the electronic device 101 in the state 601. According to an embodiment, the electronic device 101 may display a preview image that fills the displaying area based on the obtained portion 621.

Based on identifying that the size of the displaying area is modified, the electronic device 101 according to an embodiment may modify the preview image displayed in the displaying area by dividing the frames based on the modified size and positions of one or more visual objects included in the preview image. Based on identifying that the size of the displaying area is modified to a preset size associated with a FoV of a second camera different from the first camera among the plurality of cameras in the electronic device 101, the electronic device 101 may display the preview image in the displaying area based on at least a portion 622 of frames obtained from the second camera. For example, in the state 601 of displaying the preview image based on the first camera, the electronic device 101 may display the preview image based on the second camera based on identifying that the size of the displaying area is modified to a preset size (or a preset ratio interval) associated with the second camera. The state 602 of FIG. 6A may include a state of the electronic device 101 displaying the preview image based on the second camera. In the state 602, as described above with reference to the state 601, the electronic device 101 may adjust the zoom level of the second camera and/or perform a crop on the frames based on subjects included in the FoV 612 of the second camera. In the state 603, as described above with reference to the state 601, the electronic device 101 may adjust the zoom level of the third camera and/or perform a crop on the frames based on subjects included in the FoV 613 of the third camera. In the state 603, the electronic device 101 may obtain a preview image by cropping a portion 623 of the frames obtained from the third camera.

Referring to FIG. 6A, in the states 601, 602, and 603 in which a preview image is displayed based on a camera selected based on the size of the displaying area among the cameras, the electronic device 101 may perform a crop on a portion of frames including a preset subject based on identifying the preset subject, such as a person, from frames received from the selected camera. While modifying the camera corresponding to the preview image based on the modification in the size of the displaying area, the electronic device 101 may perform a crop such that the preset subject is maintained within the preview image. Referring to the states 601, 602, and 603 of FIG. 6A, independently of displaying a preview image based on different cameras, a commonly captured subject by the cameras may be maintained in the preview image.

According to an embodiment, the electronic device 101 may selectively perform at least one of a crop with respect to the frames and/or an adjustment of the zoom level of the camera based on a type of a subject included in the frames obtained from the camera, while modifying a camera activated to display a preview image among the plurality of cameras based on a modification in the size of the displaying area. In the states 601, 602, and 603 of FIG. 6A identifying a preset subject such as a person from the frames, the electronic device 101 may obtain a preview image based on a crop with respect to the portions 621, 622, and 623 of the frames including the preset subject.

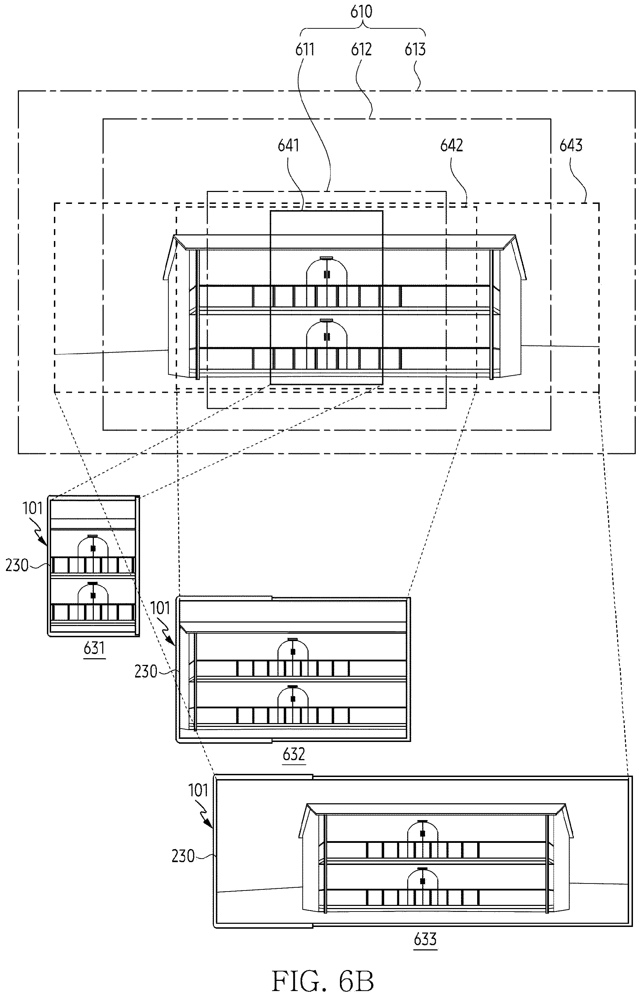

Referring to FIG. 6B, the states 631, 632, and 633 are illustrated, in which the electronic device 101 according to an embodiment displays a preview image at least based on the size of the displaying area while the cameras of the electronic device 101 are positioned toward an external space including a building. Each of the states 631, 632, and 633 may indicate a state in which each of the three cameras included in the electronic device 101 is selectively activated. For example, the camera activated by the electronic device 101 in each of the states 631, 632, and 633 may be the first camera to the third camera included in the electronic device 101, similar to the states 601, 602, and 603.

According to an embodiment, the electronic device 101 may execute a function associated with the camera based on identifying the preset subject, such as the building, from frames obtained from the camera activated in each of the states 631, 632, and 633. The above function may be executed by the electronic device 101 to maintain the preset subject in the preview image while the camera for displaying the preview image among the cameras in the electronic device 101 is modified. In the state 631 in which the size of the displaying area is minimum among the states 631, the electronic device 101 may display a preview image based on a portion 641 of the FoV 611 of the first camera having the minimum FoV among the FoVs 610. An aspect ratio and/or a size of the preview image may match an aspect ratio and/or the size of the displaying area of the electronic device 101 in the state 631. Based on identifying that the size of the displaying area has increased within the state 631, the electronic device 101 may identify whether the size is switched to a preset size (e.g., a size having the width wp_a1 of FIG. 5) for switching the camera. In case that the size of the displaying area increases beyond the preset size, the electronic device 101 may enter the state 632 of displaying a preview image based on the second camera from the state 631.

In the state 632, from frames based on the FoV 612 of the second camera, the electronic device 101 may identify a preset subject, such as a building. Based on identifying the preset subject such as the building, the electronic device 101 may modify the zoom level of the second camera to obtain a portion 642 related to the building and having a size of the displaying area. The obtained portion 642 may be displayed as a preview image through the displaying area of the electronic device 101. After switching from the state 632 to the state 633 according to an increase in the size of the displaying area, the electronic device 101 may display a preview image in the FoV 613 of the third camera based on a portion 643 including the building. The electronic device 101 may obtain the portions 641, 642, and 643 from each of the frames of the first camera to the third camera based on a composition for displaying the building in the preview image. In case that the entire preset subject is included in the frames, such as the FoV 613 of the third camera, the electronic device 101 may obtain the portion 643 such that the size of the portion including the preset subject in the preview image is maintained to be greater than or equal to a preset size.

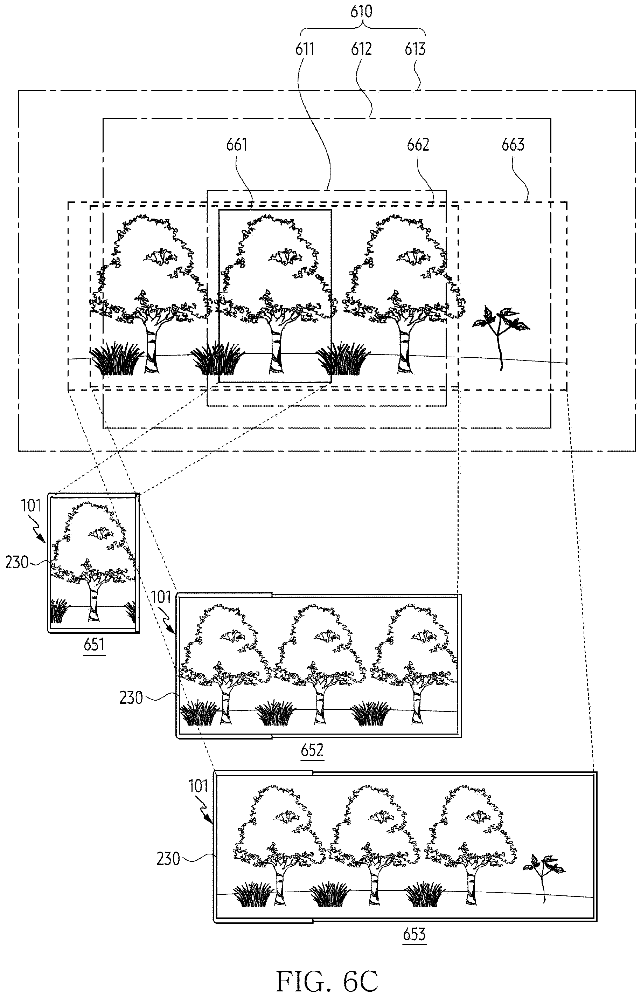

Referring to FIG. 6C, the states 651, 652, and 653 are illustrated in which the electronic device 101 according to an embodiment displays a preview image based on the size of the displaying area while the electronic device 101 obtains frames including natural scenery based on at least one camera. Each of the states 651, 652, and 653 may indicate a state in which each of the three cameras included in the electronic device 101 is selectively activated. For example, the camera activated by the electronic device 101 in each of the states 651, 652, and 653 may be the first camera to the third camera included in the electronic device 101, similar to the states 601, 602, and 603.

According to an embodiment, the electronic device 101 may obtain a preview image by dividing the frames based on the size of the displaying area, frames obtained based on the camera, and/or the composition of the preview image. Among the cameras, in the state 651 in which the first camera having the minimum FoV (e.g., the FoV 611) is activated, based on the composition of the natural scenery included in the frames obtained from the first camera, the electronic device 101 may divide a portion 661 of the frames. Based on the divided portion 661, the electronic device 101 may display a preview image. Similarly, as the size of the displaying area is modified, in each of the states 652 and 653 in which the second camera to the third camera different from the first camera are activated, the electronic device 101 may extract portions 662 and 663 in the FoVs 612 and 613 corresponding to the second camera to the third camera, respectively, based on the composition of the natural scenery captured by the second camera to the third camera. For example, in the state 602, the electronic device 101 may adjust the zoom level for the second camera or obtain a preview image based on a crop with respect to the portion 662.

As described above with reference to FIGS. 6A to 6C, according to an embodiment, the electronic device 101 may extract at least a portion of the frames based on scene analysis and/or subject recognition with respect to the frames obtained through the camera. In case that no information (e.g., a category of frames, such as natural scenery, and/or one or more subjects included in the frames, such as people) is identified from the frames, the electronic device 101 may obtain a preview image by performing a crop with respect to the frames based on a direction in which the size of the displaying area increases and/or decreases in response to a modification in the size of the displaying area.

As described above, according to an embodiment, the electronic device 101 may obtain a preview image based on the size of the displaying area, the composition in the frames obtained through the camera, and/or types of one or more subjects captured by the camera. The size of the displaying area may be identified by the electronic device 101 to activate at least one of the plurality of cameras included in the electronic device 101. The composition, and/or the types of the one or more subjects, may be identified by the electronic device 101 to divide at least portions associated with the preview image from the frames of the activated camera. The portions (e.g., the portions 621, 622, 623, 641, 642, 643, 661, 662, and 663 of FIGS. 6A to 6C) divided from the frames may have an aspect ratio of the displaying area. The portions divided from the frames may be associated with the types of the natural scenery and/or one or more subjects included within the frames. Based on the at least portions divided from the frames, the electronic device 101 may modify the preview image displayed in the displaying area. The electronic device 101 may obtain a preview image optimized for a variable size of the displaying area based on selective activation of the camera, a crop with respect to the frames, and/or adjustment of the zoom level of the activated camera. The preview image may have a composition optimized for the variable size of the displaying area.

Hereinafter, referring to FIG. 7, an example of a user interface (UI) that the electronic device 101 according to an embodiment displays in the flexible display 230 together with a preview image obtained by performing a crop and/or a modification of the zoom level with respect to the selectively activated camera based on a size of the displaying area will be described.

FIG. 7 illustrates an example of a screen displayed in a flexible display 230 by an electronic device 101 according to an embodiment. The electronic device 101 of FIG. 7 may be an example of the electronic device 101 of FIG. 4. For example, the electronic device 101 and the flexible display 230 of FIG. 4 may include the electronic device 101 and the flexible display 230 of FIG. 7. Referring to FIG. 7, an exemplary state 710 is illustrated in which the electronic device 101 displays a preview image based on a camera positioned toward an external space including a building. The state 710 of FIG. 7 may be included in the state 632 of FIG. 6B.

In the state 710, according to an embodiment, the electronic device 101 may activate a camera for displaying a preview image among a plurality of cameras in the electronic device 101 based on a size of a displaying area in the flexible display 230. Within frames sequentially outputted from an activated camera, the electronic device 101 may identify one or more visual objects. In the state 710, the electronic device 101 may identify, within the frames, a visual object corresponding to a preset subject, such as a building. In the state 710, the electronic device 101 may display the preview image based on a portion of the frames in which the visual object is positioned such that the identified visual object is maintained within the preview image. Based on identifying that the size of the displaying area is modified, the electronic device 101 according to an embodiment may adjust the dimensions of the portion in which the frames are cropped based on the modified size. For example, the dimension of the portion may have an aspect ratio of the modified size. Meanwhile, the electronic device 101 may obtain a preview image by adjusting a zoom magnification (or magnification) of a camera corresponding to the preview image based on the identified visual object.

The activation of a camera based on the modification in the size of the displaying area and the control (e.g., adjustment of the zoom magnification, and/or a crop with respect to the frames outputted from the camera) of the activated camera may be automatically performed by the electronic device 101 that identifies the modification in the size of the displaying area. According to an embodiment, the electronic device 101 may display a visual object 720 for adjusting whether to automatically perform activation of the camera and/or control of the activated camera to a user through the flexible display 230. As in the state 710 of FIG. 7, the electronic device 101 according to an embodiment may display the visual object 720 for notifying that at least one of a crop with respect to the frames obtained from the camera or a modification in the magnification of the first camera is performed based on a type of one or more visual objects displayed in the preview image, superimposed on the preview image displayed in the displaying area. Referring to FIG. 7, in the state 710, together with the visual object 720, the electronic device 101 may display a visual object 330 for receiving a shooting input and/or a visual object 320 for switching the cameras corresponding to the preview image.

Based on the visual object 720, the electronic device 101 may receive a user input to modify whether to perform a modification of a camera based on the modification in the size of the displaying area, scene analysis on the frames obtained from the modified camera, and/or editing (e.g., a crop, and/or modifying the zoom magnification) of the frames based on subject recognition. Receiving the user input by the electronic device 101 is not limited to the visual object 720 of FIG. 7. For example, the electronic device 101 may receive the user input based on a button exposed to an outside through at least a portion of a housing.

Hereinafter, with reference to FIGS. 8 to 9, an operation performed by the electronic device 101 according to an embodiment will be described.

FIG. 8 illustrates an example of a flowchart for describing an operation of an electronic device according to an embodiment. The electronic device of FIG. 8 may include the electronic device 101 of FIGS. 1 to 7. For example, at least one of operations of FIG. 8 may be performed by the electronic device 101 and/or the processor 120 of FIG. 4.

Referring to FIG. 8, in operation 810, the electronic device according to an embodiment may display a preview image based on a first camera among a plurality of cameras. The first camera of the operation 810 may be selected from among cameras in the electronic device based on a size of a displaying area of the electronic device in a state of performing the operation 810. For example, based on a ratio of the current size of the displaying area within a minimum size and a maximum size, the electronic device may select a camera to display a preview image from among the cameras. Selecting a camera for displaying a preview image by the electronic device may include an operation of selecting a camera that outputs one or more frames for displaying a preview image from among the plurality of cameras in the electronic device. The operation of selecting the first camera of the operation 810 by the electronic device may be associated with the operation described above with reference to FIG. 5. The electronic device may obtain a preview image based on at least a portion of the frames outputted from the first camera based on the above-described operation with reference to FIGS. 6A to 6C. In a state of displaying a preview image, the electronic device may display one or more visual objects (e.g., the visual objects 320, 330, and 720 of FIG. 7) based on the operation described above with reference to FIG. 7.

In the state of displaying a preview image based on the operation 810, in operation 820, the electronic device according to an embodiment may determine whether the size of the displaying area is modified. Before the size of the displaying area is modified (820-No), the electronic device may maintain display of the preview image using the first camera based on the operation 810. For example, before the size of the displaying area is modified (820-No), the electronic device may maintain using and/or activating the camera (e.g., the first camera) that outputs one or more frames to display a preview image. The modification in the size of the displaying area may be identified based on a sensor (e.g., the sensor 430 of FIG. 4) included in the electronic device. The modification in the size of the displaying area may be performed based on an input indicating to deform a flexible display (e.g., the flexible display 230 of FIG. 4) based on a preset gesture performed on the flexible display of the electronic device. Alternatively, the size of the displaying area may be modified based on an external force applied to a housing and/or the flexible display of the electronic device.

Based on identifying that the size of the displaying area is modified (820-Yes), in operation 830, the electronic device according to an embodiment may determine whether a difference between the size of the displaying area and a preset size for switching to a second camera is less than or equal to a preset difference. The preset size may be associated with the widths wp_a1 and wp_b1 of FIG. 5. The preset difference may be associated with a range (e.g., the margins 512, 514, 522, and 524 of FIG. 5) of size for activating both the first camera and the second camera. In case that the difference between the size of the displaying area and the preset size is greater than or equal to the preset difference (830-No), the electronic device may maintain activating the first camera among the plurality of cameras.

In case that the difference between the size of the displaying area and the preset size is less than or equal to the preset difference (830-Yes), in operation 840, the electronic device according to an embodiment may activate the second camera. The current consumption of the second camera may increase after performing the operation 840, as it is activated based on the operation 840. As the second camera is activated, the electronic device may obtain frames from both the first camera and the second camera.

Referring to FIG. 8, in operation 850, the electronic device according to an embodiment may determine whether the size of the displaying area corresponds to the preset size. For example, after the difference between the size of the displaying area and the preset size is reduced to less than or equal to the preset difference of the operation 830, the electronic device may identify whether the size of the displaying area matches the preset size. Before the size of the displaying area corresponds to the preset size (850-No), the electronic device may maintain the activation of the first camera and the second camera.

Based on identifying the size of the displaying area corresponding to the preset size (850-Yes), in operation 860, the electronic device according to an embodiment may display a preview image based on the second camera. Referring to FIG. 8, activating the second camera by the electronic device may be performed prior to switching the camera corresponding to the preview image based on the preset size, based on the operation 840 being performed prior to the operation 860. In the state of displaying the preview image based on the operation 860, the electronic device may perform at least one of a crop with respect to the frames and/or adjustment of a zoom magnification of the second camera based on scene analysis and/or subject recognition of the frames obtained from the second camera.

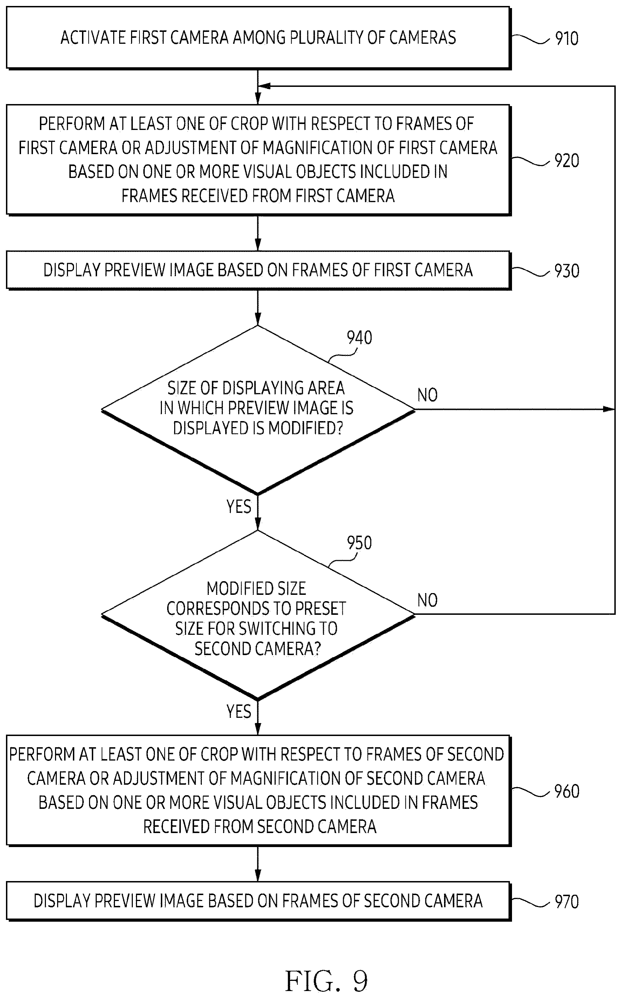

FIG. 9 illustrates an example of a flowchart for describing an operation of an electronic device according to an embodiment. The electronic device of FIG. 9 may include the electronic device 101 of FIGS. 1 to 7, and/or the electronic device of FIG. 8. For example, at least one of operations of FIG. 9 may be performed by the electronic device 101 and/or the processor 120 of FIG. 4. At least one of the operations of FIG. 9 may be associated with the operations of FIG. 8.

Referring to FIG. 9, in operation 910, the electronic device according to an embodiment may activate a first camera among a plurality of cameras. Referring to FIG. 9, in operation 920, the electronic device according to an embodiment may perform at least one of adjusting a magnification of the first camera or a crop with respect to frames of the first camera based on one or more visual objects included in frames received from the first camera. Referring to FIG. 9, in operation 930, the electronic device according to an embodiment may display a preview image based on the frames of the first camera. In a state in which the first camera among the plurality of cameras is activated, the electronic device may obtain a preview image from the frames received from the first camera based on the operation described above with reference to FIGS. 6A to 6C. The operation 810 of FIG. 8 may be associated with at least one of the operations 910, 920, and 930 of FIG. 9.

Referring to FIG. 9, in operation 940, the electronic device according to an embodiment may determine whether a size of a displaying area in which the preview image is displayed is modified. The operation 940 of FIG. 9 may be performed similarly to the operation 820 of FIG. 8. Before the size of the displaying area is modified (940-No), the electronic device may maintain displaying the preview image based on the activated first camera by performing the operations 920 and 930.

In a state of identifying that the size of the displaying area is modified (940-Yes), in operation 950, the electronic device according to an embodiment may determine whether the modified size of the displaying area corresponds to a preset size for switching to a second camera different from the first camera. Before the modified size of the displaying area corresponds to the preset size (950-No), the electronic device may maintain displaying the preview image based on the activated first camera by performing the operations 920, 930, and 940. In case that the modified size of the displaying area is included within a margin associated with the preset size, the electronic device may activate the second camera different from the first camera to prepare for switching a camera corresponding to the preview image from the first camera to the second camera.

In case that the modified size of the displaying area corresponds to the preset size for switching to the second camera (950-Yes), in operation 960, the electronic device according to an embodiment may perform at least one of adjusting a magnification of the second camera, or a crop with respect to the frames of the second camera, based on one or more visual objects included in the frames received from the second camera. Performing the operation 960 with respect to the frames of the second camera by the electronic device may be performed similarly to performing the operation 920 with respect to the frames of the first camera. The operations 920 and 960 may be associated with the operation of the electronic device described with reference to FIGS. 6A to 6C.

Referring to FIG. 9, in operation 970, the electronic device according to an embodiment may display a preview image based on the frames of the second camera. Displaying the preview image based on the frames of the second camera by the electronic device may be performed similarly to the operation 930 of displaying the preview image based on the frames of the first camera.

As described above, the electronic device according to an embodiment may obtain a preview image having the modified size of the displaying area based on the modification of the size of the displaying area due to deformation of the flexible display. Obtaining the preview image having the modified size of the displaying area by the electronic device may be performed based on an operation of activating at least one of the plurality of cameras in the electronic device based on the size of the displaying area. Obtaining the preview image having the modified size of the displaying area by the electronic device may be performed based on a composition of frames received from an activated camera, and/or one or more visual objects included in the frames. Based on the composition and/or the one or more visual objects, the electronic device may obtain the preview image by adjusting the zoom magnification of the activated camera or performing a crop with respect to the frames.

Hereinafter, with reference to FIGS. 10A to 10D, 11A to 11B, and 12A to 12B, an exemplary structure of the electronic device for actively deforming the flexible display based on a user input will be described.

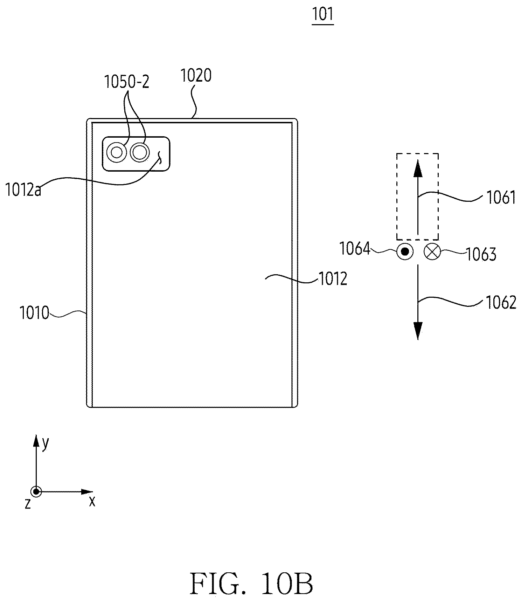

A display (e.g., the flexible display 230 of FIGS. 2A to 2B, FIGS. 3A to 3B, FIG. 4, and/or FIG. 7, and/or the display module 160 of FIG. 1) of the electronic device according to an embodiment, described above with reference to FIGS. 1 to 9, may be flexible. For example, the display may include a displaying area exposed outside a housing of the electronic device that provides at least a portion of an outer surface of the electronic device. For example, since the display has flexibility, at least a portion of the display may be rollable into the housing or slidable into the housing. For example, the size of the displaying area may be modified according to a size of the at least a portion of the display rolled into the housing or slid into the housing. For example, the electronic device including the display may be in a plurality of states including a first state providing the displaying area having a first size and a second state providing the displaying area having a second size different from the first size. For example, the first state may be exemplified through the description of FIGS. 10A and 10B.

FIG. 10A is a top plan view of an exemplary electronic device 101 in a first state.

Referring to FIG. 10A, the electronic device 101 may include a first housing 1010, a second housing 1020 that is movable with respect to the first housing 1010 in a first direction 1061 parallel to a y-axis, or a second direction 1062 that is parallel to the y-axis and opposite to the first direction 1061, and a display 1030 (e.g., the above display).

For example, the electronic device 101 may be in the first state. For example, in the first state, the second housing 1020 may be movable with respect to the first housing 1010 in the first direction 1061 among the first direction 1061 and the second direction 1062. For example, in the first state, the second housing 1020 may not be movable in the second direction 1062 with respect to the first housing 1010.

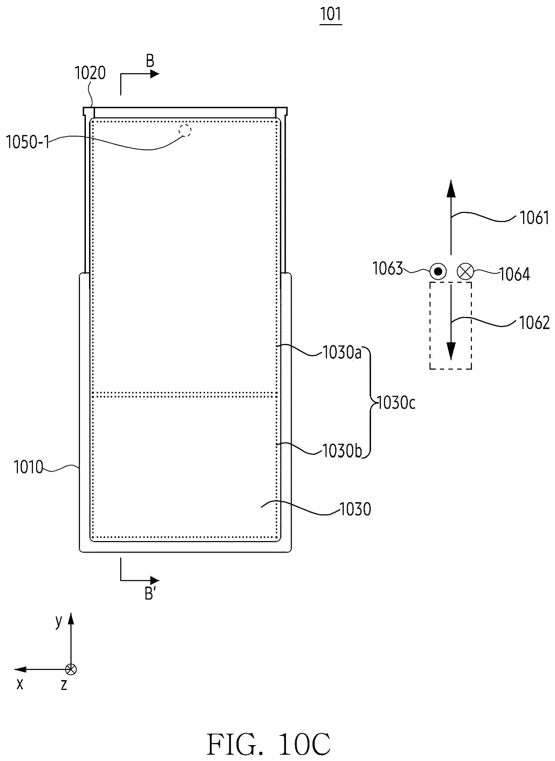

For example, in the first state, the display 1030 may provide the displaying area having the smallest size. For example, in the first state, the displaying area may correspond to an area 1030a. For example, although not illustrated in FIG. 10A, in the first state, an area (e.g., an area 1030b of FIG. 10C) of the display 1030 different from the area 1030a, which is the displaying area, may be included in the first housing 1010. For example, in the first state, the area may be occluded by the first housing 1010. For example, in the first state, the area may be rolled into the first housing 1010. For example, in the first state, the area 1030a may include a planar portion, unlike the area including a curved portion. However, it is not limited thereto. For example, in the first state, the area 1030a may include the curved portion extending from the planar portion and located within an edge portion.

For example, the first state may be referred to as a slide-in state or a closed state in terms of at least a portion of the second housing 1020 being located within the first housing 1010. For example, the first state may be referred to as a reduced state in terms of providing the displaying area having the smallest size. However, it is not limited thereto.

For example, the first housing 1010 may include a first image sensor 1050-1 in a camera module 180 exposed through a portion of the area 1030a and faces a third direction 1063 parallel to a z-axis. For example, although not illustrated in FIG. 10A, the second housing 1020 may include one or more second image sensors in the camera module 180 exposed through a portion of the second housing 1020 and face a fourth direction 1064 parallel to the z-axis and opposite to the third direction 1063. For example, the one or more second image sensors may be exemplified through the description of FIG. 10B.

FIG. 10B is a bottom view of an exemplary electronic device in a first state.

Referring to FIG. 10B, in the first state, one or more second image sensors 1050-2 positioned in a second housing 1020 may be located within a structure positioned in a first housing 1010 for one or more second image sensors 1050-2. For example, light from an outside of an electronic device 101 may be received by one or more second image sensors 1050-2 through the structure in the first state. For example, since one or more second image sensors 1050-2 are located within the structure in the first state, one or more second image sensors 1050-2 may be exposed through the structure in the first state. For example, the structure may be implemented in various ways. For example, the structure may be an opening or a notch. For example, the structure may be an opening 1012a in a plate 1012 of the first housing 1010 surrounding at least a portion of the second housing 1020. However, it is not limited thereto. For example, in the first state, one or more second image sensors 1050-2 included in the second housing 1020 may be occluded by the plate 1012 of the first housing 1010.

Referring again to FIG. 1, the first state may be modified to the second state.

For example, the first state (or the second state) may be modified to the second state (or the first state) through one or more intermediate states between the first state and the second state.

For example, the first state (or the second state) may be modified to the second state (or the first state) based on a predefined user input. For example, the first state (or the second state) may be modified to the second state (or the first state) in response to a user input to a physical button exposed through a portion of the first housing 1010 or a portion of the second housing 1020. For example, the first state (or the second state) may be modified to the second state (or the first state) in response to a touch input to an executable object displayed within the displaying area. For example, the first state (or the second state) may be modified to the second state (or the first state) in response to a touch input having a contact point on the displaying area and having a pressing intensity greater than or equal to a reference intensity. For example, the first state (or the second state) may be modified to the second state (or the first state) in response to a voice input received through a microphone of the electronic device 101. For example, the first state (or the second state) may modify to the second state (or the first state) in response to an external force applied to the first housing 1010 and/or the second housing 1020 to move the second housing 1020 with respect to the first housing 1010. For example, the first state (or the second state) may be modified to the second state (or the first state) in response to a user input identified from an external electronic device (e.g., earbuds or a smart watch) connected to the electronic device 101. However, it is not limited thereto.

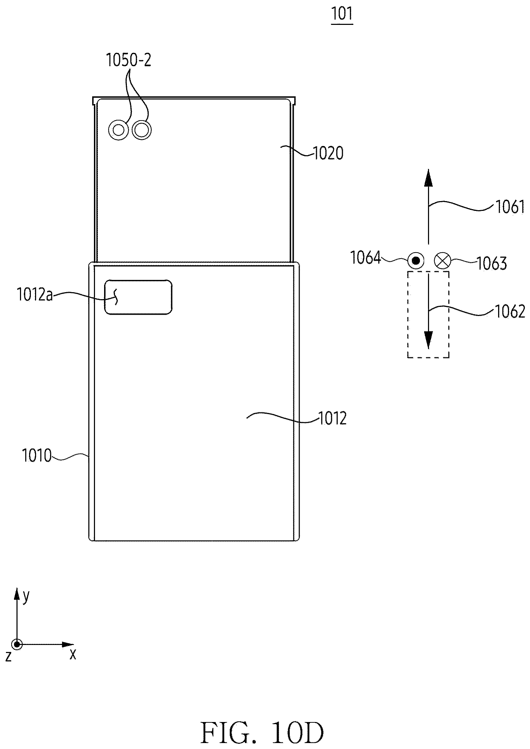

The second state may be exemplified through the description of FIGS. 10C and 10D.

FIG. 10C is a top plan view of an exemplary electronic device in a second state.

Referring to FIG. 10C, the electronic device 101 may be in the second state. For example, in the second state, a second housing 1020 may be movable with respect to a first housing 1010 in a second direction 1062 among a first direction 1061 and the second direction 1062. For example, in the second state, the second housing 1020 may not be movable in the first direction 1061 with respect to the first housing 1010.

For example, in the second state, a display 1030 may provide the displaying area having the largest size. For example, in the second state, the displaying area may correspond to an area 330c including an area 1030a and an area 1030b. For example, the area 1030b that was included in the first housing 1010 in the first state may be exposed in the second state. For example, in the second state, the area 1030a may include a planar portion. However, it is not limited thereto. For example, the area 1030a may include a curved portion extending from the planar portion and located within an edge portion. For example, in the second state, the area 1030b may include the planar portion among the planar portion and the curved portion, unlike the area 1030a in the first state. However, it is not limited thereto. For example, the area 1030b may include the curved portion extending from the planar portion of the area 1030b and located within the edge portion.

For example, the second state may be referred to as a slide-out state or an open state in terms of at least a portion of the second housing 1020 being located outside the first housing 1010. For example, the second state may be referred to as an expanded state in terms of providing the displaying area having the largest size. However, it is not limited thereto.

For example, when the state of the electronic device 101 modifies from the first state to the second state, a first image sensor 1050-1 facing a third direction 1063 may be moved together with the area 1030a according to a movement of the second housing 1020 in the first direction 1061. For example, although not illustrated in FIG. 510C, one or more second image sensors 1050-2 facing a fourth direction 1064 may be moved according to the movement of the second housing 1020 in the first direction 1061 when the state of the electronic device 101 modifies from the first state to the second state. For example, a relative positional relationship between one or more second image sensors 1050-2 and the structure exemplified through the description of FIG. 5B may be modified according to the movement of one or more second image sensors 1050-2. For example, the modification in the relative positional relationship may be exemplified through FIG. 10D.

FIG. 10D is a bottom view of an exemplary electronic device 101 in a second state.

Referring to FIG. 10D, in the second state, one or more second image sensors 1050-2 may be located outside the structure. For example, in the second state, one or more second image sensors 1050-2 may be located outside an opening 1012a in a plate 1012. For example, since one or more second image sensors 1050-2 are located outside the opening 1012a in the second state, one or more second image sensors 1050-2 may be exposed in the second state. For example, since one or more second image sensors 1050-2 are located outside the structure in the second state, the relative positional relationship in the second state may be different from the relative positional relationship in the first state.

For example, in case that the electronic device 101 does not include the structure, such as the opening 1012a, one or more second image sensors 1050-2 in the second state may be exposed, unlike one or more second image sensors 1050-2 in the first state.

Although not illustrated in FIGS. 10A, 10B, 10C, and 10D, the electronic device 101 may be in an intermediate state between the first state and the second state. For example, the size of the displaying area in the intermediate state may be larger than the size of the displaying area in the first state and smaller than the size of the displaying area in the second state. For example, the displaying area in the intermediate state may correspond to an area including the area 1030a and a portion of the area 1030b. For example, in the intermediate state, a portion of the area 1030b may be exposed, and another portion (or remaining portion) of the area 1030b may be occluded by the first housing 1010 or rolled into the first housing 1010. However, it is not limited thereto.

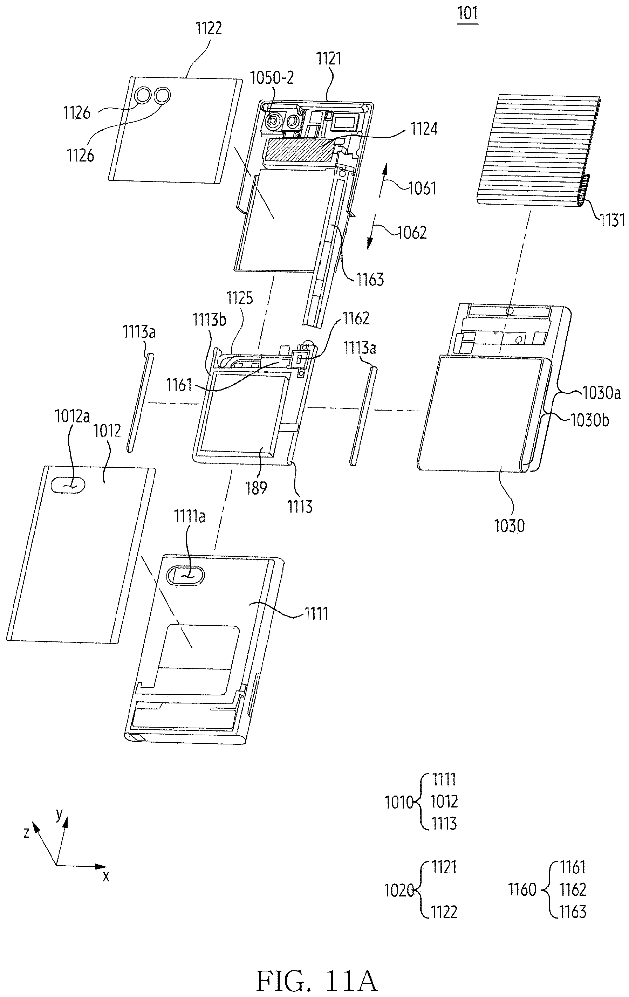

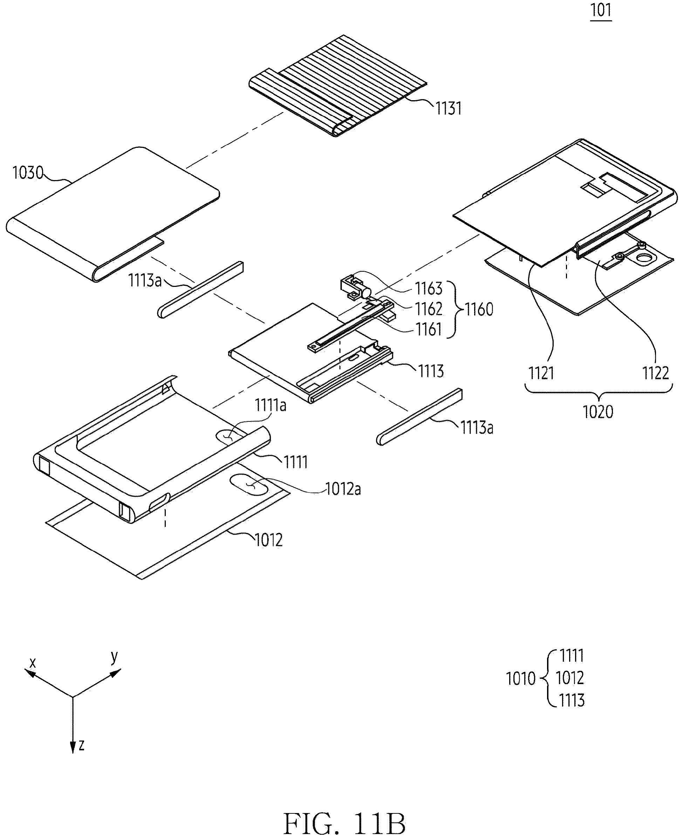

Referring again to FIG. 1, the electronic device 101 may include structures for moving the second housing (e.g., the second housing 1020 of FIG. 10) of the electronic device 101 with respect to the first housing (e.g., the first housing 1010 of FIG. 10) of the electronic device 101. For example, the structures may be exemplified through the description of FIGS. 11A and 11B.

FIGS. 11A and 11B are exploded perspective views of an exemplary electronic device.

Referring to FIGS. 11A and 11B, an electronic device 101 may include a first housing 1010, a second housing 1020, a display 1030, and a driving unit 1160.

For example, the first housing 1010 may include a book cover 1111, a plate 1012, and a frame cover 1113.

For example, the book cover 1111 may at least partially form a side portion of an outer surface of the electronic device 101. For example, the book cover 1111 may at least partially form a rear portion of the outer surface. For example, the book cover 1111 may include an opening 1111a for one or more second image sensors 1050-2. For example, the book cover 1111 may include a surface that supports the plate 1012. For example, the book cover 1111 may be coupled with the plate 1012. For example, the book cover 1111 may include the frame cover 1113. For example, the book cover 1111 may be coupled with the frame cover 1113.

For example, the plate 1012 may at least partially form the rear portion of the outer surface. For example, the plate 1012 may include an opening 1012a for one or more second image sensors 1050-2. For example, the plate 1012 may be positioned on the surface of the book cover 1111. For example, the opening 1012a may be aligned with the opening 1111a.

For example, the frame cover 1113 may be at least partially surrounded by the book cover 1111.

For example, the frame cover 1113 may be at least partially surrounded by the display 1030. For example, the frame cover 1113 may be at least partially surrounded by the display 1030, but a position of the frame cover 1113 may be maintained independently of a movement of the display 1030. For example, the frame cover 1113 may be arranged in relation to at least some of components of the display 1030. For example, the frame cover 1113 may include rails 1113a that provide (or guide) a path for movement of at least one component of the display 1030.

For example, the frame cover 1113 may be coupled with at least one component of the electronic device 101. For example, the frame cover 1113 may support a rechargeable battery 189. For example, the battery 189 may be supported through a recess or hole in a surface 1113b of the frame cover 1113. For example, the frame cover 1113 may be coupled with one end of a flexible printed circuit board (FPCB) 1125 on a surface on the frame cover 1113. For example, although not explicitly illustrated in FIGS. 11A and 11B, another end of the FPCB 1125 may be connected to a PCB 1124 through at least one connector. For example, the PCB 1124 may be electrically connected to another PCB (not illustrated in FIGS. 11A and 11B) that supplies power to a motor 1161 through the FPCB 1125.

For example, the frame cover 1113 may be coupled with at least one structure of the electronic device 101 for a plurality of states including the first state and the second state. For example, the frame cover 1113 may fasten the motor 1161 of the driving unit 1160.

For example, the second housing 1020 may include a front cover 1121 and a slide cover 1122.

For example, the front cover 1121 may be at least partially surrounded by the display 1030. For example, the front cover 1121 may be coupled with at least a portion of an area 1030a of the display 1030 surrounding the front cover 1121, unlike the frame cover 1113, such that the display 1030 moves according to the second housing 1020 that moves with respect to the first housing 1010.

For example, the front cover 1121 may be coupled with at least one component of the electronic device 101. For example, the front cover 1121 may be coupled with the printed circuit board (PCB) 1124 including the components of the

EP 4 564 837 A1

electronic device 101. For example, the PCB 1124 may include a processor 120 (not illustrated in FIGS. 11A and 11B). For example, the front cover 1121 may include one or more second image sensors 1050-2.

For example, the front cover 1121 may be coupled with at least one structure of the electronic device 101 for the plurality of states including the first state and the second state. For example, the front cover 1121 may fasten a rack gear 1163 of the driving unit 1160.

For example, the front cover 1121 may be coupled with the slide cover 1122.

For example, the slide cover 1122 may be coupled with the front cover 1121 to protect at least one component of the electronic device 101 coupled within the front cover 1121 and/or at least one structure of the electronic device 101 coupled within the front cover 1121. For example, the slide cover 1122 may include a structure for the at least one component. For example, the slide cover 1122 may include one or more openings 1126 for one or more second image sensors 1050-2. For example, one or more openings 1126 may be aligned with one or more second image sensors 1050-2 positioned on the front cover 1121. For example, the size of each of one or more openings 1126 may correspond to the size of each of one or more second image sensors 1050-2.

For example, the display 1030 may include a support member 1131. For example, the support member 1131 may include a plurality of bars. For example, the plurality of bars may be coupled with each other.

For example, the driving unit 1160 may include the motor 1161, a pinion gear 1162, and the rack gear 1163.

For example, the motor 1161 may operate based on power from the battery 189. For example, the power may be provided to the motor 1161 in response to the predefined user input.

For example, the pinion gear 1162 may be coupled to the motor 1161 through a shaft. For example, the pinion gear 1162 may be rotated based on the above operation of the motor 1161 transmitted through the shaft.

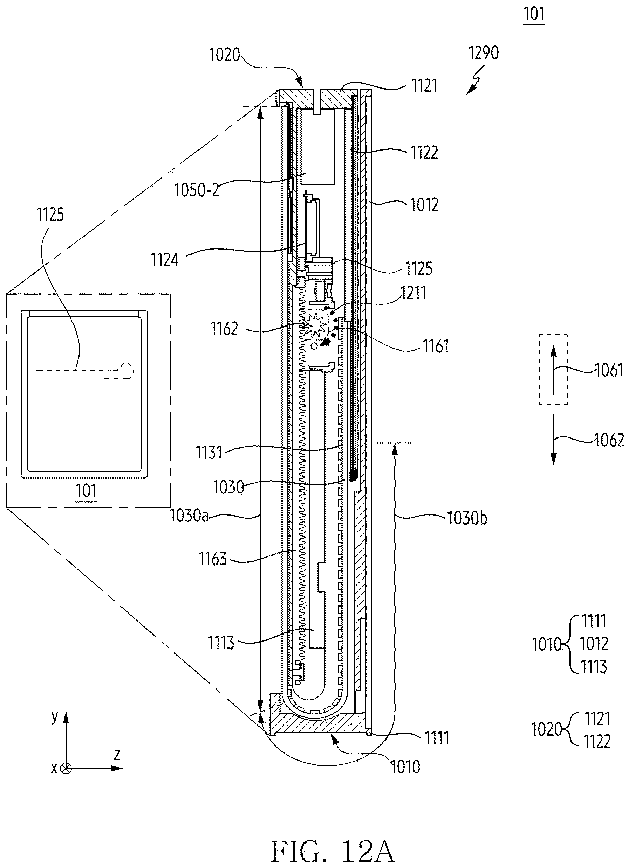

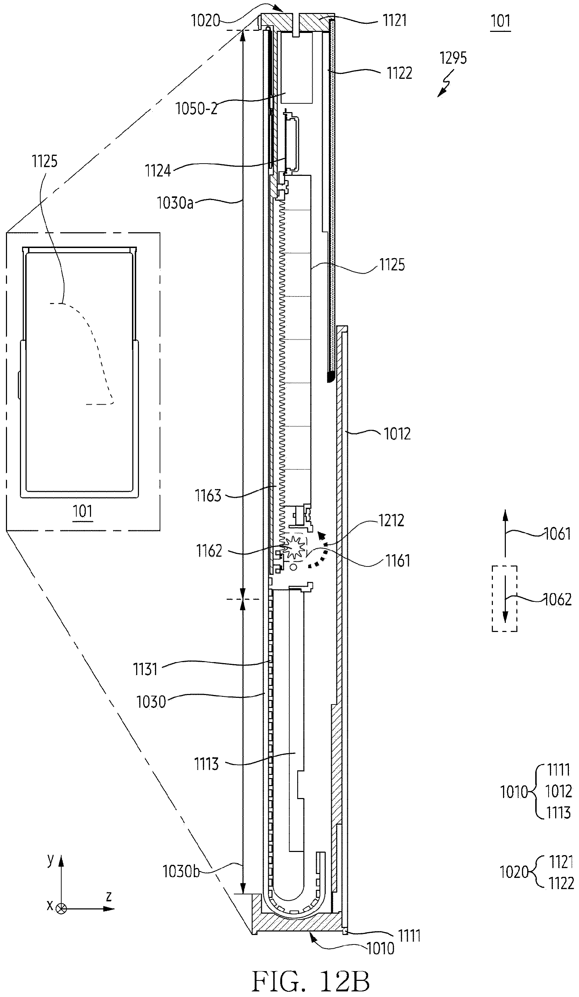

For example, the rack gear 1163 may be arranged in relation to the pinion gear 1162. For example, the teeth of the rack gear 1163 may be engaged with the teeth of the pinion gear 1162. For example, the rack gear 1163 may be moved in a first direction 1061 or a second direction 1062 according to a rotation of the pinion gear 1162. For example, the second housing 1020 may be moved in the first direction 1061 and the second direction 1062 by the rack gear 1163 that moves according to the rotation of the pinion gear 1162 due to the above operation of the motor 1161. For example, the first state of the electronic device 101 may be modified to a state (e.g., the one or more intermediate states or the second state) different from the first state through the movement of the second housing 1020 in the first direction 1061. For example, the second state of the electronic device 101 may be modified to a state (e.g., the one or more intermediate states or the first state) different from the second state through the movement of the second housing 1020 in the second direction 1062. For example, the first state being modified to the second state by the driving unit 1160 and the second state being modified to the first state by the driving unit 1160 may be exemplified through FIGS. 12A and 12B.

FIG. 12A is a cross-sectional view of an exemplary electronic device in a first state. FIG. 12B is a cross-sectional view of an exemplary electronic device in a second state.

Referring to FIGS. 12A and 12B, a motor 1161 may be operated based at least in part on the predefined user input received in a state 1290, which is the first state. For example, a pinion gear 1162 may be rotated in a first rotation direction 1211 based at least in part on the operation of the motor 1161. For example, a rack gear 1163 may be moved in a first direction 1161 based at least in part on the rotation of the pinion gear 1162 in the first rotation direction 1211. For example, since a front cover 1121 in a second housing 1120 fastens the rack gear 1163, the second housing 1120 may be moved in the first direction 1061 based at least in part on the movement of the rack gear 1163 in the first direction 1161. For example, since the front cover 1121 in the second housing 1120 is coupled with at least a portion of an area 1030a of a display 1030 and fastens the rack gear 1163, the display 1030 may be moved based at least in part on the movement of the rack gear 1163 in the first direction 1161. For example, the display 1030 may be moved along rails 1113a. For example, a shape of at least a portion of the plurality of bars of a support member 1131 of the display 1030 may be modified when the state 1290 modifies to a state 1295, which is the second state.

For example, an area 1030b of the display 1030 may be moved according to the movement of the display 1030. For example, when the state 1290 modifies to the state 1295 according to the predefined user input, the area 1030b may be moved through a space between a book cover 1111 and a frame cover 1113. For example, the area 1030b in the state 1295 may be exposed, unlike the area 1030b rolled into the space in the state 1290.

For example, since the front cover 1121 in the second housing 1120 is coupled with a PCB 1124 connected to the other end of an FPCB 1125 and fastens the rack gear 1163, a shape of the FPCB 1125 may be modified when the state 1290 modifies to the state 1295.

The motor 1161 may be operated based at least in part on the predefined user input received in the state 1295. For example, the pinion gear 1162 may be rotated in a second rotation direction 1212 based at least in part on the operation of the motor 1161. For example, the rack gear 1163 may be moved in a second direction 1162 based at least in part on the rotation of the pinion gear 1162 in the second rotation direction 1212. For example, since the front cover 1121 in the second housing 1120 fastens the rack gear 1163, the second housing 1120 may be moved in the second direction 1062, based at least in part on the movement of the rack gear 1163 in the second direction 1162. For example, since the front cover 1121 in the second housing 1120 is coupled with at least a portion of the area 1030a of the display 1030 and fastens the rack gear 1163, the display 1030 may be moved based at least in part on the movement of the rack gear 1163 in the second direction 1162. For example, the display 1030 may be moved along the rails 1113a. For example, the shape of at least a portion of the plurality of bars of the support member 1131 of the display 1030 may be modified when the state 1295 modifies to the state 1290.

For example, the area 1030b of the display 1030 may be moved according to the movement of the display 1030. For example, when the state 1295 modifies to the state 1290 according to the predefined user input, the area 1030b may be moved through the space between the book cover 1111 and the frame cover 1113. For example, the area 1030b in the state 1290 may be rolled into the space, unlike the area 1030b exposed in the state 1295.

For example, since the front cover 1121 in the second housing 1120 is coupled with the PCB 1124 connected to the other end of the FPCB 1125 and fastens the rack gear 1163, the shape of the FPCB 1125 may be modified when the state 1295 modifies to the state 1290.

FIGS. 10A to 12B illustrate the electronic device 101 in which a height of the displaying area is modified, and a width of the displaying area is maintained when the first state (or the second state) is modified to the second state (or the first state) in a portrait mode, but this is for convenience of explanation. For example, when the first state (or the second state) modifies to the second state (or the first state) in the portrait mode, the electronic device 101 may be implemented such that the height of the displaying area is maintained and the width of the displaying area is modified.

An electronic device including a flexible display may require a method for obtaining a preview image corresponding to a variable size of a displaying area in the flexible display using a plurality of cameras in the electronic device.

As described above, an electronic device (e.g., the electronic device 101 of FIGS. 1 to 7) according to an embodiment may comprise a housing, a plurality of cameras (e.g., the cameras 340 of FIG. 4) exposed to an outside through a surface of the housing, a flexible display (e.g., the flexible display 230 of FIG. 4) that is insertable into the housing, or is extractable from the housing, a sensor (e.g., the sensor 430 of FIG. 4) for detecting a size of a displaying area (e.g., the displaying area 310 of FIG. 3A) of the flexible display extracted from the housing, and a processor (e.g., the processor 120 of FIG. 4). The processor may be configured to display, in the displaying area of the flexible display having a first size, a preview image based on a first camera having a field-of-view (FoV) (e.g., the FoVs 610 of FIGS. 6A to 6C) corresponding to the first size among the plurality of cameras. The processor may be configured to identify a size of the displaying area by using the sensor, in response to an input which indicates modifying the size of the displaying area to a second size different from the first size. The processor may be configured to activate, in a state where the size of the displaying area is modified based on the input, a second camera having a FoV corresponding to the second size among the plurality of cameras, based on identifying that a difference between the size of the displaying area and the second size is lower than or equal to a preset difference by using the sensor. The processor may be configured to display, based on identifying that the size of the displaying area is modified to the second size by the input, the preview image based on the activated second camera among the first camera and the second camera. The electronic device according to an embodiment may obtain a preview image corresponding to a variable size of the displaying area by using the plurality of cameras.

For example, the processor may be configured to identify, in frames sequentially outputted from the first camera, one or more visual objects. The processor may be configured to display, in the state, the preview image based on a portion of the frames where the one or more visual objects are positioned such that the one or more visual objects are maintained in the preview image.

For example, the processor may be configured to obtain, in the state that a size of the displaying area is increased from the first size to the second size larger than the first size, the preview image based on a crop with respect to the frames. The processor may be configured to adjust, in the state, a portion where the frames are cropped based on a size of the displaying area modified based on the input.

For example, the processor may be configured to obtain, in the state, the preview image by adjusting a magnification of the first camera based on a size of the displaying area modified based on the input.

For example, the processor may be configured to identify types of the one or more visual objects included in the preview image. The processor may be configured to obtain, in the state, based on the identified types, the preview images by adjusting the magnification of the first camera, or a portion where the frames are cropped obtained from the first camera.

For example, the processor may be configured to identify, based on execution of a preset application to display the preview image, a size of the displaying area using the sensor. The processor may be configured to obtain a ratio between a size of the identified displaying area, and a maximum size of the size of the displaying area based on extraction of the flexible display. The processor may be configured to select, based on the obtained ratio, the first camera among the plurality of cameras as a camera to display the preview image.

For example, the processor may be configured to identify ratio intervals distinguished by ratios of, among FoVs of the plurality of cameras, a maximum FoV and other FoVs. The processor may be configured to select, based on a ratio interval among the ratio intervals in which the ratio of a size of the displaying area and the maximum size are included, the camera to display the preview image.

For example, the processor may be configured to display, in the state, superimposed on the preview image, a visual object to notify that at least one of a crop with respect to frames obtained from the first camera or modification of the magnification of the first camera is performed based on a type of the one or more visual objects displayed in the preview image.

As described above, a method of an electronic device according to an embodiment may comprise identifying, among a plurality of cameras of the electronic device, a first camera having a field-of-view (FoV) corresponding to a size of a displaying area of a flexible display extracted from a housing of the electronic device. The method may comprise displaying a preview image in the displaying area based on at least a portion of frames obtained from the identified first camera. The method may comprise modifying, based on identifying that the size of the displaying area is modified, the preview image displayed in the displaying area by segmenting the frames based on positions of one or more visual objects included in the preview image, and the modified size. The method may comprise displaying, based on identifying that the size of the displaying area is modified to a preset size associated with a FoV of a second camera different from the first camera, the preview image in the displaying area based on at least a portion of frames obtained from the second camera.

For example, the modifying may comprise identifying an aspect ratio of the displaying area while the size of the displaying area is modified. The modifying may comprise dividing portions of the frames in which the one or more visual objects are displayed, based on the identified aspect ratio. The modifying may comprise modifying the preview image based on the divided portions of the frames.

For example, the identifying may comprise identifying, among preset ratio intervals respectively corresponding to the plurality of cameras, a ratio interval in which a first ratio between the size of the displaying area and a preset size are included. The identifying may comprise obtaining frames to display the preview image by controlling the first camera corresponding to the identified ratio interval.

For example, the modifying may comprise obtaining, based on identifying that the size of the displaying area is included in a preset size range including the preset size, which is a first preset size, a bitstream indicating the frames obtained from the second camera by activating the second camera. The modifying may comprise identifying, based on identifying that the size of the displaying area is modified to the first preset size, the frames obtained by the second camera based on the obtained bitstream.

For example, the modifying may comprise modifying the preview image based on another bitstream obtained from the first camera independently from the bitstream obtained from the second camera while the size of the displaying area is modified.

For example, the modifying may comprise obtaining information indicating a composition of the preview image based on at least one of positions or types of one or more visual objects included in the preview image. The modifying may comprise modifying the preview image by dividing the frames based on the modified size of the displaying area based on the information.

For example, the identifying may comprise identifying FoVs of each of the plurality of cameras exposed to an outside through a surface of a housing of the electronic device. The identifying may comprise selecting the first camera among the plurality of cameras by comparing the identified FoVs and a size of the displaying area.

As described above, a method of an electronic device according to an embodiment may comprise displaying, in a displaying area of a flexible display of the electronic device having a first size, a preview image based on a first camera having a field-of-view (FoV) corresponding to the first size among a plurality of cameras of the electronic device. The method may comprise identifying a size of the displaying area by using a sensor of the electronic device, in response to an input which indicates modifying the size of the displaying area to a second size different from the first size. The method may comprise activating, in a state where the size of the displaying area is modified based on the input, a second camera having a FoV corresponding to the second size among the plurality of cameras, based on identifying that a difference between the size of the displaying area and the second size is lower than or equal to a preset difference by using the sensor. The method may comprise displaying, based on identifying that the size of the displaying area is modified to the second size by the input, the preview image based on the activated second camera among the first camera and the second camera.

For example, the displaying the preview image based on the first camera may comprise identifying one or more visual objects in frames sequentially outputted from the first camera. The displaying the preview image based on the first camera may comprise displaying, in the state, the preview image based on a portion of the frames where the one or more visual objects are positioned such that the one or more visual objects are maintained in the preview image.

For example, the displaying the preview image based on the first camera may comprise obtaining, in the state that a size of the displaying area is increased from the first size to the second size larger than the first size, the preview image based on a crop with respect to the frames. The displaying the preview image based on the first camera may comprise adjusting, in the state, a portion where the frames are cropped based on a size of the displaying area modified based on the input.

For example, the displaying the preview image based on the first camera may comprise obtaining, in the state, the preview image by adjusting a magnification of the first camera based on a size of the displaying area modified based on the input.

For example, the displaying the preview image based on the first camera may comprise identifying types of the one or more visual objects included in the preview image. The displaying the preview image based on the first camera may comprise obtaining, in the state, based on the identified types, the preview image by adjusting the magnification of the first camera, or a portion where the frames are cropped obtained from the first camera.

For example, the displaying the preview image based on the first camera may comprise identifying, based on execution of a preset application to display the preview image, a size of the displaying area using the sensor. The displaying the preview image based on the first camera may comprise obtaining a ratio between a size of the identified displaying area, and a maximum size of the size of the displaying area based on extraction of the flexible display. The displaying the preview image based on the first camera may comprise selecting, based on the obtained ratio, the first camera among the plurality of cameras as a camera to display the preview image.

As described above, an electronic device according to an embodiment may comprise a housing, a plurality of cameras exposed to an outside through a surface of the housing, a flexible display that is insertable into the housing, or is extractable from the housing, a sensor for detecting a size of a displaying area of the flexible display extracted from the housing, and a processor. The processor may be configured to identify, among the plurality of cameras, a first camera having a field-of-view (FoV) corresponding to a size of the displaying area. The processor may be configured to display a preview image in the displaying area based on at least a portion of frames obtained from the identified first camera. The processor may be configured to modify, based on identifying that the size of the displaying area is modified, the preview image displayed in the displaying area by segmenting the frames based on positions of one or more visual objects included in the preview image, and the modified size. The processor may be configured to display, based on identifying that the size of the displaying area is modified to a preset size associated with a FoV of a second camera different from the first camera, the preview image in the displaying area based on at least a portion of frames obtained from the second camera.

For example, the processor may be configured to identify an aspect ratio of the displaying area while the size of the displaying area is modified. The processor may be configured to divide portions of the frames in which the one or more visual objects are displayed, based on the identified aspect ratio. The processor may be configured to modify the preview image based on the divided portions of the frames.

For example, the processor may be configured to identify, among preset ratio intervals respectively corresponding to the plurality of cameras, a ratio interval in which a first ratio between the size of the displaying area and a preset size are included. The processor may be configured to obtain frames to display the preview image by controlling the first camera corresponding to the identified ratio interval.

For example, the processor may be configured to obtain, based on identifying that the size of the displaying area is included in a preset size range including the preset size, which is a first preset size, a bitstream indicating the frames obtained from the second camera by activating the second camera. The processor may be configured to identify, based on identifying that the size of the displaying area is modified to the first preset size, the frames obtained by the second camera based on the obtained bitstream.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

**Claims**

1. An electronic device 101, comprising:

    a housing;
    a plurality of cameras 340 exposed to an outside through a surface of the housing;
    a flexible display 230 that is insertable into the housing, or is extractable from the housing;
    a sensor 430 for detecting a size of a displaying area of the flexible display extracted from the housing; and
    a processor 120,
    wherein the processor is configured to:

        display, in the displaying area of the flexible display having a first size, a preview image based on a first camera having a field-of-view (FoV) corresponding to the first size among the plurality of cameras;
        identify a size of the displaying area by using the sensor, in response to an input which indicates modifying the size of the displaying area to a second size different from the first size;
        activate, in a state where the size of the displaying area is modified based on the input, a second camera having a FoV corresponding to the second size among the plurality of cameras, based on identifying that a difference between the size of the displaying area and the second size is lower than or equal to a preset difference by using the sensor; and
        display, based on identifying that the size of the displaying area is modified to the second size by the input, the preview image based on the activated second camera among the first camera and the second camera.

2. The electronic device of claim 1, wherein the processor is configured to:

    identify, in frames sequentially outputted from the first camera, one or more visual objects;
    display, in the state, the preview image based on a portion of the frames where the one or more visual objects are positioned such that the one or more visual objects are maintained in the preview image.

3. The electronic device of any one of claim 1 to claim 2, wherein the processor is configured to:

    obtain, in the state that a size of the displaying area is increased from the first size to the second size larger than the first size, the preview image based on a crop with respect to the frames;
    adjust, in the state, a portion where the frames are cropped based on a size of the displaying area modified based on the input.

4. The electronic device of any one of claim 1 to claim 3, wherein the processor is configured to:
obtain, in the state, the preview image by adjusting a magnification of the first camera based on a size of the displaying area modified based on the input.

5. The electronic device of any one of claim 1 to claim 4, wherein the processor is configured to:

    identify types of the one or more visual objects included in the preview image;
    obtain, in the state, based on the identified types, the preview images by adjusting the magnification of the first camera, or a portion where the frames are cropped obtained from the first camera.

6. The electronic device of any one of claim 1 to claim 5, wherein the processor is configured to:

identify, based on execution of a preset application to display the preview image, a size of the displaying area using the sensor;

obtain a ratio between a size of the identified displaying area, and a maximum size of the size of the displaying area based on extraction of the flexible display;

select, based on the obtained ratio, the first camera among the plurality of cameras as a camera to display the preview image.

7. The electronic device of any one of claim 1 to claim 6, wherein the processor is configured to:

identify ratio intervals distinguished by ratios of, among FoVs of the plurality of cameras, a maximum FoV and other FoVs;

select, based on a ratio interval among the ratio intervals in which the ratio of a size of the displaying area and the maximum size are included, the camera to display the preview image.

8. The electronic device of any one of claim 1 to claim 7, wherein the processor is configured to:
in the state, display, superimposed on the preview image, a visual object to notify that at least one of a crop with respect to frames obtained from the first camera or modification of the magnification of the first camera is performed based on a type of the one or more visual objects displayed in the preview image.

9. A method of an electronic device, comprising:

identifying, among a plurality of cameras of the electronic device, a first camera having a field-of-view (FoV) corresponding to a size of a displaying area of a flexible display extracted from a housing of the electronic device;

displaying a preview image in the displaying area based on at least a portion of frames obtained from the identified first camera;

modifying, based on identifying that the size of the displaying area is modified, the preview image displayed in the displaying area by segmenting the frames based on positions of one or more visual objects included in the preview image, and the modified size; and

displaying, based on identifying that the size of the displaying area is modified to a preset size associated with a FoV of a second camera different from the first camera, the preview image in the displaying area based on at least a portion of frames obtained from the second camera.

10. The method of claim 9, wherein the modifying comprises:

identifying an aspect ratio of the displaying area while the size of the displaying area is modified;

dividing portions of the frames in which the one or more visual objects are displayed, based on the identified aspect ratio;

modifying the preview image based on the divided portions of the frames.

11. The method of any one of claim 9 to claim 10, wherein the identifying comprises:

identifying, among preset ratio intervals respectively corresponding to the plurality of cameras, a ratio interval in which a first ratio between the size of the displaying area and a preset size are included;

obtaining frames to display the preview image by controlling the first camera corresponding to the identified ratio interval.

12. The method of any one of claim 9 to claim 11, wherein the modifying comprises:

obtaining, based on identifying that the size of the displaying area is included in a preset size range including the preset size, which is a first preset size, a bitstream indicating the frames obtained from the second camera by activating the second camera;

identifying, based on identifying that the size of the displaying area is modified to the first preset size, the frames obtained by the second camera based on the obtained bitstream.

13. The method of any one of claim 9 to claim 12, wherein the modifying comprises:
modifying the preview image based on another bitstream obtained from the first camera independently from the bitstream obtained from the second camera while the size of the displaying area is modified.

**14.** The method of any one of claim 9 to claim 13, wherein the modifying comprises:

obtaining information indicating a composition of the preview image based on at least one of positions or types of one or more visual objects included in the preview image; and

modifying the preview image by dividing the frames based on the modified size of the displaying area based on the information.

**15.** The method of any one of claim 9 to claim 14, wherein the identifying comprises:

identifying FoVs of each of the plurality of cameras exposed to an outside through a surface of a housing of the electronic device;

selecting the first camera among the plurality of cameras by comparing the identified FoVs and a size of the displaying area.

100

ELECTRONIC DEVICE 101

PROGRAM 140

APPLICATION 146

MIDDLEWARE 144

OPERATING SYSTEM 142

INPUT MODULE 150

SOUND OUTPUT MODULE 155

DISPLAY MODULE 160

MEMORY 130

VOLATILE MEMORY 132

NON-VOLATILE MEMORY 134

INTERNAL MEMORY 136

EXTERNAL MEMORY 138

BATTERY 189

POWER MANAGE-MENT MODULE 188

PROCESSOR 120

MAIN PROCESSOR 121

AUXILIARY PROCESSOR 123

COMMUNICATION MODULE 190

WIRELESS COMMUNICATION MODULE 192

WIRED COMMUNICATION MODULE 194

SUBSCRIBER IDENTIFICATION MODULE 196

ANTENNA MODULE 197

AUDIO MODULE 170

SENSOR MODULE 176

HAPTIC MODULE 179

CAMERA MODULE 180

INTERFACE 177

CONNECTING TERMINAL 178

SECOND NETWORK 199

FIRST NETWORK 198

ELECTRONIC DEVICE 102

ELECTRONIC DEVICE 104

SERVER 108

FIG. 1

FIG. 2A

FIG. 2B

FIG. 3A

FIG. 3B

ELECTRONIC DEVICE (101)

405

PROCESSOR (120)

FLEXIBLE DISPLAY (230)

CAMERA (340)

FIRST CAMERA (341)

SECOND CAMERA (342)

THIRD CAMERA (343)

MEMORY (130)

PMIC (410)

ACTUATOR (420)

SENSOR (430)

FIG. 4

FIG. 5

FIG. 6A

FIG. 6B

FIG. 6C

AUTOMATIC CAMERA CONTROL : ON

FIG. 7

DISPLAY PREVIEW IMAGE BASED ON
FIRST CAMERA AMONG PLURALITY
OF CAMERAS ⟍ 810

820

SIZE OF DISPLAYING AREA
IS MODIFIED? — NO

YES

830

DIFFERENCE BETWEEN
SIZE OF DISPLAYING AREA AND
PRESET SIZE FOR SWITCHING TO
SECOND CAMERA IS LESS
THAN OR EQUAL TO PRESET
DIFFERENCE? — NO

YES

840

ACTIVATE SECOND CAMERA

850

SIZE OF DISPLAYING AREA
CORRESPONDS TO PRESET SIZE? — NO

YES

860

DISPLAY PREVIEW IMAGE BASED ON
SECOND CAMERA

FIG. 8

ACTIVATE FIRST CAMERA AMONG PLURALITY OF CAMERAS — 910

PERFORM AT LEAST ONE OF CROP WITH RESPECT TO FRAMES OF FIRST CAMERA OR ADJUSTMENT OF MAGNIFICATION OF FIRST CAMERA BASED ON ONE OR MORE VISUAL OBJECTS INCLUDED IN FRAMES RECEIVED FROM FIRST CAMERA — 920

DISPLAY PREVIEW IMAGE BASED ON FRAMES OF FIRST CAMERA — 930

940

SIZE OF DISPLAYING AREA IN WHICH PREVIEW IMAGE IS DISPLAYED IS MODIFIED?

NO

YES

950

MODIFIED SIZE CORRESPONDS TO PRESET SIZE FOR SWITCHING TO SECOND CAMERA?

NO

YES

PERFORM AT LEAST ONE OF CROP WITH RESPECT TO FRAMES OF SECOND CAMERA OR ADJUSTMENT OF MAGNIFICATION OF SECOND CAMERA BASED ON ONE OR MORE VISUAL OBJECTS INCLUDED IN FRAMES RECEIVED FROM SECOND CAMERA — 960

DISPLAY PREVIEW IMAGE BASED ON FRAMES OF SECOND CAMERA — 970

FIG. 9

FIG. 10A

101

1050-2   1020

1012a

1010

1012

1061

1064   1063

1062

y

z   x

FIG. 10B

101

FIG. 10C

101

1050-2

1020

1061

1064 1063

1012a

1062

1012

1010

y

z x

FIG. 10D

FIG. 11A

101

1131

1030

1113a

1163
1162 } 1160
1161

1111a

1113

1113a

1111

1012a

1012

1121

1122

1020

x  y

z

1010 { 1111
1012
1113

FIG. 11B

FIG. 12A

FIG. 12B

## INTERNATIONAL SEARCH REPORT

| International application No. |
| --- |
| **PCT/KR2023/009441** |

### A. CLASSIFICATION OF SUBJECT MATTER

**H04N 23/63**(2023.01)i; **H04N 23/90**(2023.01)i; **H04N 23/57**(2023.01)i; **H04M 1/02**(2006.01)i; **H04M 1/72448**(2021.01)i

According to International Patent Classification (IPC) or to both national classification and IPC

### B. FIELDS SEARCHED

Minimum documentation searched (classification system followed by classification symbols)

H04N 23/63(2023.01); G06F 3/0484(2013.01); G09F 9/00(2006.01); H04N 5/225(2006.01); H04N 5/232(2006.01); H04N 5/77(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 플렉서블 디스플레이(flexible display), 화각(Field-of-View, FoV), 프리뷰 이미지 (preview image), 사이즈(size), 센서(sensor), 카메라(camera)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2022-0066800 A (SAMSUNG ELECTRONICS CO., LTD.) 24 May 2022 (2022-05-24)<br>See paragraphs [0022]-[0069], [0116]-[0165] and [0288]; and claims 1 and 7-8. | 1-15 |
| Y | KR 10-2020-0101207 A (SAMSUNG ELECTRONICS CO., LTD.) 27 August 2020 (2020-08-27)<br>See paragraphs [0108] and [0112]; and claims 1 and 6. | 1-15 |
| Y | KR 10-2020-0087746 A (QUALCOMM INCORPORATED) 21 July 2020 (2020-07-21)<br>See paragraph [0018]. | 12-13 |
| A | KR 10-2014-0115913 A (LG ELECTRONICS INC.) 01 October 2014 (2014-10-01)<br>See paragraphs [0018]-[0264]; claims 1-20; and figures 1-47. | 1-15 |
| A | US 2017-0085764 A1 (LG ELECTRONICS INC.) 23 March 2017 (2017-03-23)<br>See paragraphs [0042]-[0243]; claims 1-20; and figures 1a-17. | 1-15 |

☐ Further documents are listed in the continuation of Box C.　　☑ See patent family annex.

| | | |
| --- | --- | --- |
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **20 October 2023** | **23 October 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2023/009441** |

| Patent document cited in search report | | | Publication date (day/month/year) | Patent family member(s) | | | Publication date (day/month/year) |
| --- | --- | --- | --- | --- | --- | --- | --- |
| KR | 10-2022-0066800 | A | 24 May 2022 | WO | 2022-103009 | A1 | 19 May 2022 |
| KR | 10-2020-0101207 | A | 27 August 2020 | CN | 111586286 | A | 25 August 2020 |
| | | | | EP | 3700184 | A1 | 26 August 2020 |
| | | | | EP | 3700184 | B1 | 15 February 2023 |
| | | | | EP | 4161086 | A1 | 05 April 2023 |
| | | | | US | 11115598 | B2 | 07 September 2021 |
| | | | | US | 11509830 | B2 | 22 November 2022 |
| | | | | US | 2020-0267326 | A1 | 20 August 2020 |
| | | | | US | 2021-0400206 | A1 | 23 December 2021 |
| | | | | US | 2023-0090774 | A1 | 23 March 2023 |
| | | | | WO | 2020-171568 | A1 | 27 August 2020 |
| KR | 10-2020-0087746 | A | 21 July 2020 | CN | 111066315 | A | 24 April 2020 |
| | | | | CN | 111066315 | B | 06 July 2021 |
| | | | | CN | 113329160 | A | 31 August 2021 |
| | | | | CN | 113329160 | B | 18 August 2023 |
| | | | | EP | 3682627 | A2 | 22 July 2020 |
| | | | | US | 10630895 | B2 | 21 April 2020 |
| | | | | US | 11394876 | B2 | 19 July 2022 |
| | | | | US | 2019-0082101 | A1 | 14 March 2019 |
| | | | | US | 2020-0244874 | A1 | 30 July 2020 |
| | | | | US | 2022-0321776 | A1 | 06 October 2022 |
| | | | | WO | 2019-051376 | A2 | 14 March 2019 |
| | | | | WO | 2019-051376 | A3 | 25 April 2019 |
| KR | 10-2014-0115913 | A | 01 October 2014 | EP | 2976766 | A1 | 27 January 2016 |
| | | | | EP | 2976766 | A4 | 02 November 2016 |
| | | | | EP | 2976766 | B1 | 19 December 2018 |
| | | | | KR | 10-2081932 | B1 | 14 April 2020 |
| | | | | US | 09013458 | B2 | 21 April 2015 |
| | | | | US | 2014-0285476 | A1 | 25 September 2014 |
| | | | | WO | 2014-148698 | A1 | 25 September 2014 |
| US | 2017-0085764 | A1 | 23 March 2017 | KR | 10-2017-0035237 | A | 30 March 2017 |
| | | | | US | 10291833 | B2 | 14 May 2019 |
| | | | | WO | 2017-051975 | A1 | 30 March 2017 |

Form PCT/ISA/210 (patent family annex) (July 2022)